# EUROPEAN PATENT APPLICATION

(11) **EP 4 572 207 A1**
(43) Date of publication of application: **18.06.2025**
(21) Application number: 23851940.9
(22) Date of filing: 10.08.2023
(51) Int. Cl.: H04L 5/00, H04B 7/08

(54) **CSI REPORTING METHOD, TERMINAL, NETWORK DEVICE, APPARATUS, AND STORAGE MEDIUM**

(30) Priority: 12.08.2022 CN 202210970544
(71) Applicant: Datang Mobile Communications Equipment Co., Ltd., Beijing 100085 (CN)
(72) Inventor: HUANG, Qiuping, Beijing 100085 (CN); SONG, Lei, Beijing 100085 (CN); LI, Hui, Beijing 100085 (CN); GAO, Qiubin, Beijing 100085 (CN); LUO, Yajuan, Beijing 100085 (CN); SU, Xin, Beijing 100085 (CN)
(74) Representative: Cabinet Nony
(86) International application number: PCT/CN2023/112240
(87) International publication number: WO 2024/032719

(57) **Abstract**

Embodiments of the present disclosure provide a CSI reporting method, a terminal, a network device, an apparatus, and a storage medium. The method comprises: receiving CSI report indication information sent by a network device; and on the basis of the CSI report indication information, sending to the network device one or more CSI reports comprising a plurality of groups of resource indication information, wherein any two resources indicated by at least two groups of resource indication information among the plurality of groups of resource indication information can be used for uplink simultaneous transmission.

## Description

### CROSS-REFERENCES TO RELATED APPLICATIONS

The present application claims priority to Chinese patent application No. 202210970544.5 filed on August 12, 2022, entitled "CSI Reporting Method, Terminal, Network Device, Apparatus, and Storage Medium", which is hereby incorporated by reference in its entirety.

### FIELD

The present application relates to the field of communications, and in particular, to methods and apparatuses for channel state information (CSI) reporting, a terminal, a network device and a storage medium.

### BACKGROUND

In beam group reporting of the new radio (NR) system release 17 (Rel-17) protocol and previous versions of the protocol, each beam group includes two channel state information reference signal resource indicators (CRIs) or synchronization signal/physical broadcast channel (PBCH) block resource indicators (SSBRIs).

However, though two CRIs or SSBRIs may be received simultaneously, it does not mean that simultaneous transmission may be performed on uplink signals, since a network device does not know whether the two CRIs or SSBRIs correspond to a same spatial relation filter or different spatial relation filters. Even if the two CRIs or SSBRIs correspond to different spatial relation filters, it does not mean that uplink signals corresponding to the two CRIs or SSBRIs may be transmitted in parallel.

### BRIEF SUMMARY

In response to the problems in the related art, embodiments of the present application provide methods and apparatuses for channel state information (CSI) reporting, a terminal, a network device and a storage medium.

An embodiment of the present application provides a method for CSI reporting, including:
receiving CSI report indication information transmitted from a network device; and
transmitting one or more CSI reports to the network device based on the CSI report indication information, where the one or more CSI reports include multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources.

In an embodiment, transmitting the one or more CSI reports to the network device includes:
determining the multiple groups of resource indication information, and transmitting one or more CSI reports including the multiple groups of resource indication information to the network device.

In an embodiment, transmitting the one or more CSI reports to the network device based on the CSI report indication information, where the one or more CSI reports include the multiple groups of resource indication information, includes:
transmitting one CSI report to the network device based on the CSI report indication information, where the one CSI report includes multiple groups of resource indication information.

In an embodiment, transmitting the one or more CSI reports to the network device based on the CSI report indication information, where the one or more CSI reports include the multiple groups of resource indication information, includes:
transmitting multiple CSI reports to the network device based on the CSI report indication information, where the multiple CSI reports include multiple groups of resource indication information, and different CSI reports include different groups of resource indication information.

In an embodiment, the method further includes:
receiving first indication information transmitted from the network device,
where the first indication information is used to indicate one or more of the following:
   a number of groups of the at least two groups of resource indication information;
   a number of groups of the multiple groups of resource indication information;
   a number of the one or more CSI reports;
   a number of resources indicated by one group of the resource indication information; or
   a maximum number of resources indicated by one group of the resource indication information.

In an embodiment, the one or more CSI reports further include second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, where any two resources indicated inter the at least two groups of resource indication information are capable of being used for uplink simultaneous transmission.

In an embodiment, determining the multiple groups of resource indication information includes:
determining the multiple groups of resource indication information based on third indication information transmitted from the network device,
where the third indication information is used to indicate one or more of the following:
   the one CSI report is used for uplink transmission;
   uplink transmission related information corresponding to one or more groups of resource indication information corresponding to the one CSI report;
   uplink transmission related information corresponding to at least one type of resource setting corresponding to the one CSI report; or
   uplink transmission related information corresponding to at least one resource set corresponding to the one CSI report.

In an embodiment, determining the multiple groups of resource indication information includes:
determining the multiple groups of resource indication information based on fourth indication information transmitted from the network device,
where the fourth indication information is used to indicate one or more of the following:
   the multiple CSI reports is used for uplink transmission;
   uplink transmission related information corresponding to at least one CSI report in the multiple CSI reports;
   uplink transmission related information corresponding to one or more groups of resource indication information corresponding to at least one CSI report in the multiple CSI reports;
   uplink transmission related information corresponding to a resource setting corresponding to at least one CSI report in the multiple CSI reports; or
   uplink transmission related information corresponding to a resource set corresponding to at least one CSI report in the multiple CSI reports.

In an embodiment, determining the multiple groups of resource indication information includes:
determining the multiple groups of resource indication information based on a report configuration transmitted from the network device,
where all resources configured by one report configuration correspond to same uplink transmission related information; or one report configuration corresponds to one or more types of resource setting, and all resources set by one type of resource setting correspond to same uplink transmission related information; or one report configuration configures one or more resource sets, and all resources included in one resource set correspond to same uplink transmission related information.

In an embodiment, the uplink transmission related information includes one or more of the following:
an antenna panel;
a transmission and/or reception point;
a sounding reference signal resource set;
an uplink transmission capability index;
an uplink transmission capability value; or
a control resource set pool.

In an embodiment, determining the multiple groups of resource indication information includes:
determining the multiple groups of resource indication information based on fifth indication information transmitted from the network device,
where the fifth indication information is used to indicate one or more of the following:
   an association relationship between report configurations corresponding to at least two groups of resource indication information in the multiple groups of resource indication information;
   an association relationship between resource settings corresponding to at least two groups of resource indication information in the multiple groups of resource indication information; or
   an association relationship between resource sets corresponding to at least two groups of resource indication information in the multiple groups of resource indication information.

In an embodiment, the association relationship includes:
whether capable of being used for uplink simultaneous transmission; and/or
whether corresponding to same uplink transmission related information.

In an embodiment, two resources or two report configurations or two resource settings or two types of resource sets corresponding to different uplink transmission related information are capable of being used for uplink simultaneous transmission.

In an embodiment, the two report configurations or the two types of resource settings or the two resource sets are capable of being used for uplink simultaneous transmission includes:
any two resources respectively corresponding to the two report configurations or the two types of resource settings or the two resource sets are capable of being used for uplink simultaneous transmission.

In an embodiment, the two resources are capable of being used for uplink simultaneous transmission includes one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

An embodiment of the present application further provides a method for channel state information (CSI) reporting, including:
receiving one or more CSI reports transmitted from a terminal based on CSI report indication information, where the one or more CSI reports include multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources; and
determining two resources capable of being used for uplink simultaneous transmission based on the multiple groups of resource indication information.

In an embodiment, the multiple groups of resource indication information are determined by the terminal.

In an embodiment, receiving the one or more CSI reports transmitted from the terminal based on the CSI report indication information, where the one or more CSI reports include the multiple groups of resource indication information, includes:
receiving one CSI report transmitted from the terminal based on the CSI report indication information, where the one CSI report includes multiple groups of resource indication information.

In an embodiment, receiving the one or more CSI reports transmitted from the terminal based on the CSI report indication information, where the one or more CSI reports include the multiple groups of resource indication information, includes:
receiving multiple CSI reports transmitted from the terminal based on the CSI report indication information, where the multiple CSI reports include multiple groups of resource indication information, the multiple CSI reports include multiple groups of resource indication information, and different CSI reports include different groups of resource indication information.

In an embodiment, the method further includes:
transmitting first indication information to the terminal, where the first indication information is used to indicate one or more of the following:
a number of groups of the at least two groups of resource indication information;
a number of groups of the multiple groups of resource indication information;
a number of the one or more CSI reports;
a number of resources indicated by one group of the resource indication information; or
a maximum number of resources indicated by one group of the resource indication information.

In an embodiment, the one or more CSI reports further include second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, where any two resources indicated inter the at least two groups of resource indication information are capable of being used for uplink simultaneous transmission.

In an embodiment, the method further includes:
transmitting third indication information to the terminal,
where the third indication information is used to indicate one or more of the following:
   the one CSI report is used for uplink transmission;
   uplink transmission related information corresponding to one or more groups of resource indication information corresponding to the one CSI report;
   uplink transmission related information corresponding to at least one type of resource setting corresponding to the one CSI report; or
   uplink transmission related information corresponding to at least one resource set corresponding to the one CSI report.

In an embodiment, the method further includes:
transmitting fourth indication information to the terminal,
where the fourth indication information is used to indicate one or more of the following:
   the multiple CSI reports is used for uplink transmission;
   uplink transmission related information corresponding to at least one CSI report in the multiple CSI reports;
   uplink transmission related information corresponding to one or more groups of resource indication information corresponding to at least one CSI report in the multiple CSI reports;
   uplink transmission related information corresponding to a resource setting corresponding to at least one CSI report in the multiple CSI reports; or
   uplink transmission related information corresponding to a resource set corresponding to at least one CSI report in the multiple CSI reports.

In an embodiment, the method further includes:
transmitting a report configuration to the terminal,
where all resources configured by one report configuration correspond to same uplink transmission related information; or one report configuration includes one or more types of resource setting, and all resources set by one type of resource setting correspond to same uplink transmission related information; or one report configuration configures one or more resource sets, and all resources included in one resource set correspond to same uplink transmission related information.

In an embodiment, the uplink transmission related information includes one or more of the following:
an antenna panel;
a transmission and/or reception point;
a sounding reference signal resource set;
an uplink transmission capability index;
an uplink transmission capability value; or
a control resource set pool.

In an embodiment, the method further includes:
transmitting fifth indication information to the terminal, where the fifth indication information is used to indicate one or more of the following:
an association relationship between report configurations corresponding to at least two groups of resource indication information in the multiple groups of resource indication information;
an association relationship between resource settings corresponding to at least two groups of resource indication information in the multiple groups of resource indication information; or
an association relationship between resource sets corresponding to at least two groups of resource indication information in the multiple groups of resource indication information.

In an embodiment, the association relationship includes:
whether capable of being used for uplink simultaneous transmission; and/or
whether corresponding to same uplink transmission related information.

In an embodiment, two resources or two report configurations or two resource settings or two types of resource sets corresponding to different uplink transmission related information are capable of being used for uplink simultaneous transmission.

In an embodiment, the two report configurations or the two types of resource settings or the two resource sets are capable of being used for uplink simultaneous transmission includes:
any two resources respectively corresponding to the two report configurations or the two types of resource settings or the two resource sets are capable of being used for uplink simultaneous transmission.

In an embodiment, the two resources are capable of being used for uplink simultaneous transmission includes one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

An embodiment of the present application further provides a terminal, including a memory, a transceiver and a processor,
where the memory is used for storing a computer program, the transceiver is used for receiving and transmitting data under control of the processor, and the processor is used for reading the computer program in the memory and performing the method for channel state information (CSI) reporting described above.

An embodiment of the present application further provides a network device, including a memory, a transceiver and a processor,
where the memory is used for storing a computer program, the transceiver is used for receiving and transmitting data under control of the processor, and the processor is used for reading the computer program in the memory and performing the method for channel state information (CSI) reporting described above.

An embodiment of the present application further provides an apparatus for channel state information (CSI) reporting, including:
a first receiving unit, used for receiving CSI report indication information transmitted from a network device; and
a transmitting unit, used for transmitting one or more CSI reports to the network device based on the CSI report indication information, where the one or more CSI reports include multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources.

In an embodiment, the transmitting unit is used for:
determining the multiple groups of resource indication information, and transmitting one or more CSI reports including the multiple groups of resource indication information to the network device.

In an embodiment, the transmitting unit is used for:
transmitting one CSI report to the network device based on the CSI report indication information, where the one CSI report includes multiple groups of resource indication information.

In an embodiment, the transmitting unit is used for:
at least two groups of resource indication information correspond to multiple CSI reports, transmitting the multiple CSI reports to the network device, where the multiple CSI reports include multiple groups of resource indication information, and different CSI reports include different groups of resource indication information.

In an embodiment, the apparatus further includes:
a second receiving unit, used for receiving first indication information transmitted from the network device,
where the first indication information is used to indicate one or more of the following:
   a number of groups of the at least two groups of resource indication information;
   a number of groups of the multiple groups of resource indication information;
   a number of the one or more CSI reports;
   a number of resources indicated by one group of the resource indication information; or
   a maximum number of resources indicated by one group of the resource indication information.

In an embodiment, the one or more CSI reports further include second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, where any two resources indicated inter the at least two groups of resource indication information are capable of being used for uplink simultaneous transmission.

In an embodiment, the determining unit is used for:
determining the multiple groups of resource indication information based on third indication information transmitted from the network device,
where the third indication information is used to indicate one or more of the following:
   the one CSI report is used for uplink transmission;
   uplink transmission related information corresponding to one or more groups of resource indication information corresponding to the one CSI report;
   uplink transmission related information corresponding to at least one type of resource setting corresponding to the one CSI report; or
   uplink transmission related information corresponding to at least one resource set corresponding to the one CSI report.

In an embodiment, the determining unit is used for:
determining the multiple groups of resource indication information based on fourth indication information transmitted from the network device,
where the fourth indication information is used to indicate one or more of the following:
   the multiple CSI reports is used for uplink transmission;
   uplink transmission related information corresponding to at least one CSI report in the multiple CSI reports;
   uplink transmission related information corresponding to one or more groups of resource indication information corresponding to at least one CSI report in the multiple CSI reports;
   uplink transmission related information corresponding to a resource setting corresponding to at least one CSI report in the multiple CSI reports; or
   uplink transmission related information corresponding to a resource set corresponding to at least one CSI report in the multiple CSI reports.

In an embodiment, the determining unit is used for:
determining the multiple groups of resource indication information based on a report configuration transmitted from the network device,
where all resources configured by one report configuration correspond to same uplink transmission related information; or one report configuration corresponds to one or more types of resource setting, and all resources set by one type of resource setting correspond to same uplink transmission related information; or one report configuration configures one or more resource sets, and all resources included in one resource set correspond to same uplink transmission related information.

In an embodiment, the uplink transmission related information includes one or more of the following:
an antenna panel;
a transmission and/or reception point;
a sounding reference signal resource set;
an uplink transmission capability index;
an uplink transmission capability value; or
a control resource set pool.

In an embodiment, the determining unit is used for:
determining the multiple groups of resource indication information based on fifth indication information transmitted from the network device,
where the fifth indication information is used to indicate one or more of the following:
   an association relationship between report configurations corresponding to at least two groups of resource indication information in the multiple groups of resource indication information;
   an association relationship between resource settings corresponding to at least two groups of resource indication information in the multiple groups of resource indication information; or
   an association relationship between resource sets corresponding to at least two groups of resource indication information in the multiple groups of resource indication information.

In an embodiment, the association relationship includes:
whether capable of being used for uplink simultaneous transmission; and/or
whether corresponding to same uplink transmission related information.

In an embodiment, two resources or two report configurations or two resource settings or two resource sets corresponding to different uplink transmission related information are capable of being used for uplink simultaneous transmission.

In an embodiment, the two report configurations or the two types of resource settings or the two resource sets are capable of being used for uplink simultaneous transmission includes:
any two resources respectively corresponding to the two report configurations or the two types of resource settings or the two resource sets are capable of being used for uplink simultaneous transmission.

In an embodiment, the two resources are capable of being used for uplink simultaneous transmission includes one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

An embodiment of the present application further provides an apparatus for channel state information (CSI) reporting, including:
a receiving unit, used for receiving one or more channel state information (CSI) reports transmitted from a terminal based on CSI report indication information, where the one or more CSI reports include multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources; and
a determining unit, used for determining two resources capable of being used for uplink simultaneous transmission based on the multiple groups of resource indication information.

In an embodiment, the multiple groups of resource indication information are determined by the terminal.

In an embodiment, receiving the one or more CSI reports transmitted from the terminal based on the CSI report indication information, where the one or more CSI reports include the multiple groups of resource indication information, includes:
receiving one CSI report transmitted from the terminal based on the CSI report indication information, where the one CSI report includes multiple groups of resource indication information.

In an embodiment, receiving the one or more CSI reports transmitted from the terminal based on the CSI report indication information, where the one or more CSI reports include the multiple groups of resource indication information, includes:
receiving multiple CSI reports transmitted from the terminal based on the CSI report indication information, where the multiple CSI reports include multiple groups of resource indication information, the multiple CSI reports include multiple groups of resource indication information, and different CSI reports include different groups of resource indication information.

In an embodiment, the apparatus further includes:
a first transmitting unit, used for transmitting first indication information to the terminal, where the first indication information is used to indicate one or more of the following:
a number of groups of the at least two groups of resource indication information;
a number of groups of the multiple groups of resource indication information;
a number of the one or more CSI reports;
a number of resources indicated by one group of the resource indication information; or
a maximum number of resources indicated by one group of the resource indication information.

In an embodiment, the one or more CSI reports further include second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, where any two resources indicated inter the at least two groups of resource indication information are capable of being used for uplink simultaneous transmission.

In an embodiment, the apparatus further includes:
a second transmitting unit, used for transmitting third indication information to the terminal, and the third indication information is used to determine multiple groups of resource indication information,
where the third indication information is used to indicate one or more of the following:
   the one CSI report is used for uplink transmission;
   uplink transmission related information corresponding to one or more groups of resource indication information corresponding to the one CSI report;
   uplink transmission related information corresponding to at least one type of resource setting corresponding to the one CSI report; or
   uplink transmission related information corresponding to at least one resource set corresponding to the one CSI report.

In an embodiment, the apparatus further includes:
a third transmitting unit, used for transmitting fourth indication information to the terminal, and the fourth indication information is used to determine multiple groups of resource indication information,
where the fourth indication information is used to indicate one or more of the following:
   the multiple CSI reports is used for uplink transmission;
   uplink transmission related information corresponding to at least one CSI report in the multiple CSI reports;
   uplink transmission related information corresponding to one or more groups of resource indication information corresponding to at least one CSI report in the multiple CSI reports;
   uplink transmission related information corresponding to a resource setting corresponding to at least one CSI report in the multiple CSI reports; or
   uplink transmission related information corresponding to a resource set corresponding to at least one CSI report in the multiple CSI reports.

In an embodiment, the apparatus further includes:
a fourth transmitting unit, used for transmitting a report configuration to the terminal,
where all resources configured by one report configuration correspond to same uplink transmission related information; or one report configuration includes one or more types of resource setting, and all resources set by one type of resource setting correspond to same uplink transmission related information; or one report configuration configures one or more resource sets, and all resources included in one resource set correspond to same uplink transmission related information.

In an embodiment, the uplink transmission related information includes one or more of the following:
an antenna panel;
a transmission and/or reception point;
a sounding reference signal resource set;
an uplink transmission capability index;
an uplink transmission capability value; or
a control resource set pool.

In an embodiment, the apparatus further includes:
a fifth transmitting unit, used for transmitting fifth indication information to the terminal, and the fifth indication information is used to determine multiple groups of resource indication information,
where the fifth indication information is used to indicate one or more of the following:
   an association relationship between report configurations corresponding to at least two groups of resource indication information in the multiple groups of resource indication information;
   an association relationship between resource settings corresponding to at least two groups of resource indication information in the multiple groups of resource indication information; or
   an association relationship between resource sets corresponding to at least two groups of resource indication information in the multiple groups of resource indication information.

**In** an embodiment, the association relationship includes:
whether capable of being used for uplink simultaneous transmission; and/or
whether corresponding to same uplink transmission related information.

**In** an embodiment, two resources or two report configurations or two resource settings or two resource sets corresponding to different uplink transmission related information are capable of being used for uplink simultaneous transmission.

**In** an embodiment, the two report configurations or the two types of resource settings or the two resource sets are capable of being used for uplink simultaneous transmission includes:
any two resources respectively corresponding to the two report configurations or the two types of resource settings or the two resource sets are capable of being used for uplink simultaneous transmission.

In an embodiment, the two resources are capable of being used for uplink simultaneous transmission includes one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

An embodiment of the present application further provides a processor-readable storage medium storing a computer program, where the computer program is used to cause a processor to perform the methods for CSI reporting described above.

An embodiment of the present application further provides a computer-readable storage medium storing a computer program, where the computer program is used to cause a computer to perform the methods for CSI reporting described above.

An embodiment of the present application further provides a communication device storing a computer program, where the computer program is used to cause the communication device to perform the methods for CSI reporting described above.

An embodiment of the present application further provides a chip product storing a computer program, where the computer program is used to cause the chip product to perform the methods for CSI reporting described above.

In the method for CSI reporting provided by the embodiments of the present application, in case that the terminal transmits the CSI report to the network device based on the CSI report indication information transmitted from the network device, multiple groups of resource indication information are carried in the CSI report, any two resources indicated inter at least two groups of resource indication information in the multiple groups of resource indication information are capable of being used for uplink simultaneous transmission, the network device may determine the resources capable of being used for uplink simultaneous transmission based on the multiple groups of resource indication information, and the terminal and the network device reach a consensus on which resources are capable of being used for uplink simultaneous transmission, which prevents the network devices from indicating resources that cannot be used simultaneously during uplink simultaneous transmissions.

### BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.
FIG. 1 is a first schematic flowchart of a method for channel state information (CSI) reporting according to an embodiment of the present application;
FIG. 2 is a second schematic flowchart of a method for CSI reporting according to an embodiment of the present application;
FIG. 3 is a schematic structural diagram of a terminal according to an embodiment of the present application;
FIG. 4 is a schematic structural diagram of a network device according to an embodiment of the present application;
FIG. 5 is a first schematic structural diagram of an apparatus for CSI reporting according to an embodiment of the present application; and
FIG. 6 is a second schematic structural diagram of an apparatus for CSI reporting according to an embodiment of the present application.

### DETAILED DESCRIPTION

In order to better describe the solutions in the embodiments of the present application, related contents are introduced below.

A new radio (NR) system supports a network device to indicate a terminal to report reference signal received power (RSRP) or reference signal received qualities (RSRQs) corresponding to multiple channel state information reference signal (CSI-RS) resources or synchronization signal/physical broadcast channel (PBCH) block (SSB) in one piece of channel state information (CSI). In one CSI report, indexes of each CSI-RS and SSB are different.

In the NR system release 15 (Rel-15) protocol and release 16 (Rel-16) protocol, group-based beam measurement reporting is supported. A terminal reports two synchronization signal/PBCH block resource indicators (SSBRIs) or two channel state information reference signal resource indicators (CRIs) in one report, and CSI-RS resources corresponding to the two CRIs or SSB resources corresponding to the two SSBRIs may be received by the terminal simultaneously by one spatial relation filter or multiple spatial relation filters.

In study of the release 17 (Rel-17) protocol, beam measurement reporting enhancement is performed for a scenario of multiple transmission and/or reception points (TRPs) transmitting and multiple antenna panels receiving, and measurement results reported by the terminal are applicable to a scenario of multiple TRPs transmitting downlinks simultaneously. The enhancement scheme is: in one CSI report, a terminal reports N (N=1, 2 ,3, or 4) groups of beams, where each group contains two beams; two beams in a same group may be received by the terminal simultaneously. The differences between Rel-17 and Rel-16 are as follows.

In Rel-16, a group of beams or a group of resources may be reported in one CSI report, each group includes two CRIs/SSBRIs of resources (RS) indicated from a same CSI resource set, and the two CRIs/SSBRIs are configured in the same CSI resource set.

In Rel-17, N (N=1, 2 ,3, or 4) groups of beams may be reported in one CSI report (a value of N is indicated by a radio resource control (RRC) signaling), each group includes two CRIs/SSBRIs, and the two CRIs/SSBRIs correspond to two CSI resource sets respectively.

Based on a configuration of a base station, an NR system supports a terminal to report a capability value index when reporting an SSBRI or a CRI, layer 1 reference signal received power (L1-RSRP) or a layer 1 signal-to-noise and interference ratio (L1-SINR) (i.e., SSBRI/CRI + L1-RSRP/L1-SINR). A capability corresponding to the capability value index is a maximum number of sounding reference signal (SRS) antenna ports that a corresponding antenna panel may support. Different capability value indexes correspond to different maximum number of SRS antenna ports.

The terminal determines a correspondence between the capability value index and a beam index (for example, SSBRI or CRI) by itself. In one beam reporting, the terminal reports the capability value index corresponding to the SSBRI/CRI to the base station when reporting SSBRI/CRI + L1-RSRP/L1-SINR, and the base station knows an uplink antenna panel corresponding to the SSBRI/CRI.

However, in the group-based beam measurement reporting, though the two CRIs or SSBRIs may be received simultaneously, it does not mean that uplink signals may be transmitted simultaneously, since the network device does not know whether the two CRIs or SSBRIs correspond to a same spatial relation filter or different spatial relation filters. Even if the two CRIs or SSBRIs correspond to different spatial relation filters, it does not mean that the uplink signals corresponding to the two CRIs or SSBRIs may be transmitted in parallel.

Further, in a scheme of reporting a capability value index corresponding to a downlink reference signal (DL RS), such as CSI-RS1 or SSB, in case that a terminal has multiple uplink antenna panels corresponding to a same maximum number of SRS antenna ports, a same capability value index is reported for the DL RS corresponding to these uplink antenna panels.

Therefore, a capability value index cannot guarantee a specific antenna panel. That is, based on a traditional mechanism, a base station may only know which DL RSs may be used as references for an uplink configuration corresponding to what maximum number of SRS antenna ports, but cannot know which DL RSs corresponds to which antenna panels. Taking a UE having two antenna panels as an example, in case that the two antenna panels of the UE correspond to a same maximum number of SRS antenna ports, adopting the capability value index reporting mechanism of Rel-17, no matter which uplink antenna panel the DL RS corresponds to, the terminal reports a same capability value index, resulting in a network device being unable to determine which two DL RSs may be used for simultaneous transmission for uplink multiple antenna panels based on a device of the terminal.

In response to one or more of the above problems in the related art, the embodiments of the present application provide methods and apparatuses for CSI reporting, a terminal, a network device and a storage medium, and the network device may determine which resources may be used for uplink simultaneous transmission based on a CSI report transmitted from the terminal to avoid indicating two resources that cannot be used for simultaneous transmission during uplink simultaneous transmission.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

The terms "first", "second", etc. are only used for description purposes, and are used to distinguish features with similarity, and cannot be interpreted as indicating or suggesting relative importance or implicitly indicating the number of indicated technical features. Thus, the feature limited with "first" or "second" may explicitly or implicitly includes at least one of these features. In the embodiments of the present application, the term "multiple" refers to two or more than two, and other quantifiers are similar.

The phrase "determining B based on A" in the present application means that the factor A should be considered when determining B. Not limited to "determining B based solely on A", it should also include "determining B based on A and C", "determining B based on A, C, and E", "determining C based on A, and further determine B based on C" etc. In addition, it may also include using A as a condition for determining B, for example, "when A satisfies a first condition, using a first method to determine B"; for another example, "in case that A satisfies a second condition, determining B" and so on; for yet another example, "in case that A satisfies a third condition, determining B based on a first parameter" and so on. A may also be used as a condition for determining B, such as "in case that A satisfies the first condition, using the first method to determine C, and further determining B based on C", etc.

The solutions according to the embodiments of the present application may be applicable to various systems, for example, 5^{th} generation (5G) systems, 6^{th} generation (6G) systems or their evolution systems, or other orthogonal frequency division multiplexing (OFDM) systems, discrete Fourier transform-spread-OFDM (DFT-S-OFDM) systems, etc. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (LTE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be two-dimension MIMO (2D-MIMO), three-dimension MIMO (3D-MIMO), full-dimension MIMO (FD-MIMO) or massive-MIMO, and may also be diversity transmission, precoding transmission, beamforming transmission, etc.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

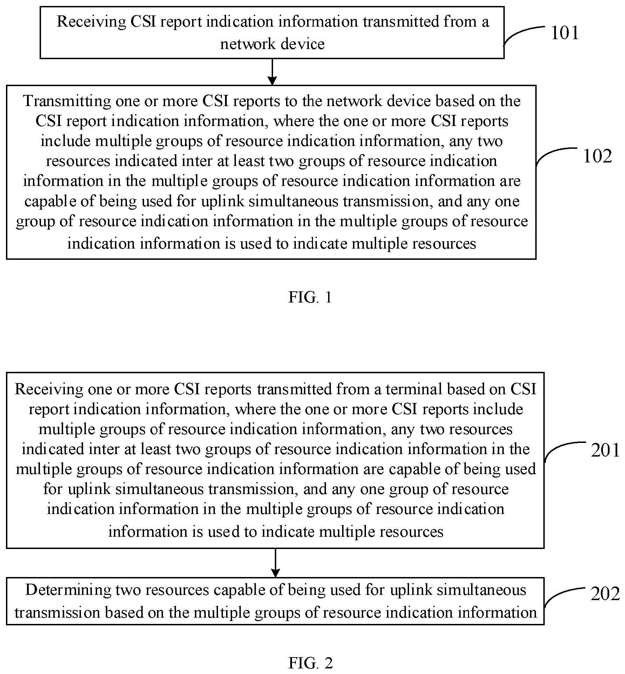

FIG. 1 is a first schematic flowchart of a method for channel state information (CSI) reporting according to an embodiment of the present application. As shown in FIG. 1, the method is performed by a terminal, and the method at least includes the following steps:
step 101: receiving CSI report indication information transmitted from a network device; and
step 102: transmitting one or more CSI reports to the network device based on the CSI report indication information, where the one or more CSI reports include multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources.

In an embodiment, the terminal receives the CSI report indication information transmitted from the base station, generates one or more CSI reports based on the CSI report indication information, and transmits the CSI reports to the network device, where the one or more CSI reports include multiple groups of resource indication information, and any two resources indicated inter at least two groups of resource indication information in the multiple groups of resource indication information may be used for uplink simultaneous transmission.

The multiple groups of resource indication information refers to, for example, multiple groups of resource identifiers, multiple groups of resource indexes, etc. Each group of resource indication information indicates one group of resources or multiple resources, such as two downlink resources, two uplink resources, two SSB resources, two CSI-RS resources, etc. Each piece of resource indication information indicates one resource.

In an embodiment, the multiple groups of resource indication information may also be in a form of multiple resource indication information groups, and each resource indication information group indicates a group of resources or multiple resources, such as multiple resource identifier groups. In the embodiments of the present application, it is taken as an example that one or more CSI reports include multiple groups of resource indication information, each group of resource indication information indicates a group of resources or multiple resources, and each piece of resource indication information indicates one resource for explanation.

Any two resources indicated inter at least two groups of resource indication information in the multiple groups of resource indication information may be used for simultaneous uplink transmission. For example, the terminal reports N groups of downlink resource identifiers in one or more CSI reports, and any two downlink resources inter at least two groups in the N groups may be used for simultaneous uplink transmission, where N is an integer greater than 1. For another example, the terminal reports N groups of SSB resource indexes in the CSI report, and any two SSB resources indicated inter at least two groups of SSB resource indexes in the N groups may be used for simultaneous uplink transmission.

Furthermore, the terminal may determine a correspondence between a resource (SSB or CSI-RS) and an antenna panel by itself, and indicate the correspondence to the network device without exposing specific antenna panel information.

In an embodiment, any two resources indicated inter at least two groups of resource indication information in the multiple groups of resource indication information are capable of being used for uplink simultaneous transmission refers to: any two resources indicated inter any two groups of resource indication information in the multiple groups of resource indication information are capable of being used for uplink simultaneous transmission. It should be noted that an inter-group indication and an intra-group indication are not the same. Any two resources indicated intra a group of resource indication information are capable of being used for uplink simultaneous transmission refers to that a group of resource indication information indicates multiple resources, and any two resources in the multiple resources are capable of being used for uplink simultaneous transmission.

In the method for CSI reporting provided by the embodiments of the present application, in case that the terminal transmits the CSI report to the network device based on the CSI report indication information transmitted from the network device, multiple groups of resource indication information are carried in the CSI report, any two resources indicated inter at least two groups of resource indication information in the multiple groups of resource indication information are capable of being used for uplink simultaneous transmission, the network device may determine the resources capable of being used for uplink simultaneous transmission based on the multiple groups of resource indication information, and the terminal and the network device reach a consensus on which resources are capable of being used for uplink simultaneous transmission, which prevents the network devices from indicating resources that cannot be used simultaneously during uplink simultaneous transmissions.

In an embodiment, transmitting the one or more CSI reports to the network device based on the CSI report indication information, where the one or more CSI reports include the multiple groups of resource indication information, includes:
transmitting one CSI report to the network device based on the CSI report indication information, where the one CSI report includes multiple groups of resource indication information.

In an embodiment, transmitting the one or more CSI reports to the network device based on the CSI report indication information, where the one or more CSI reports include the multiple groups of resource indication information, includes:
at least two groups of resource indication information correspond to multiple CSI reports, transmitting the multiple CSI reports to the network device, where the multiple CSI reports include multiple groups of resource indication information, and different CSI reports include different groups of resource indication information.

In an embodiment, in case that the terminal performs CSI reporting, it may be one CSI reporting, in which multiple groups of beams or multiple groups of resources are reported, corresponding to one CSI report. At least two groups of resource indication information transmitted from the terminal to the network device correspond to the same CSI report. Furthermore, the multiple groups of resource indication information transmitted from the terminal to the network device correspond to the same CSI report.

When the terminal is performing CSI reporting, it may also be multiple CSI reportings, in which one group of beams or one group of resources are reported in each CSI reporting, and each CSI reporting corresponds to one CSI report. At least two groups of resource indication information transmitted from the terminal to the network device may correspond to multiple CSI reports, and different groups of resource indication information correspond to different CSI reports. That is, beams in the two groups of beams included in the two CSI reports, or resources in the two groups of resources, may be used for uplink simultaneous transmission.

In an embodiment, the multiple groups of resource indication information transmitted from the terminal to the network device correspond to multiple CSI reports, and different groups of resource indication information correspond to different CSI reports.

In an embodiment, the method further includes:
receiving first indication information transmitted from the network device,
where the first indication information is used to indicate one or more of the following:
   a number of groups of the at least two groups of resource indication information;
   a number of groups of the multiple groups of resource indication information;
   a number of the one or more CSI reports;
   a number of resources indicated by one group of the resource indication information; or
   a maximum number of resources indicated by one group of the resource indication information.

In an embodiment, the terminal generates the CSI report based on assisted by the first indication information transmitted from the network device, and the first indication information is used to indicate one or more of the following.
(1) A number of groups of the at least two groups of resource indication information. That is, the number of groups of resource indication information that may be used for uplink simultaneous transmission. That is, when the terminal performs CSI reporting, the terminal needs to report multiple groups of resource indication information, and any two resources indicated inter at least two groups of resource indication information in the multiple groups of resource indication information may be used for uplink simultaneous transmission, where the number of groups of the at least two groups of resource indication information may be indicated by the network device, or predefined by a protocol, or determined by the terminal itself.
(2) A number of groups of the multiple groups of resource indication information. When the terminal performs CSI reporting, the terminal reports multiple groups of resource indication information, and a total number of groups of the multiple groups of resource indication information may be indicated by the network device, or predefined by a protocol, or determined by the terminal itself. For example, the terminal reports two groups of resource indication information, and any two resources indicated inter the two groups of resource indication information may be used for uplink simultaneous transmission.
(3) A number of the one or more CSI reports. The terminal determines to transmit one CSI report based on indication of a number of CSI reports transmitted from the network device, where the one CSI report includes measurement results of multiple groups of beams or multiple groups of resources; or the terminal determines to transmit multiple CSI reports, where each CSI report includes measurement results of one group of beams or one group of resources. In an embodiment, the number of CSI reports is a number of CSI reports that may be used for uplink simultaneous transmission.
(4) A number of resources indicated by one group of the resource indication information. The terminal determines a number of resources corresponding to each group of resource indication information in the CSI report based on the number of resources. The number of resources indicated by each group of resource indication information may be the same or different. The network device may indicate one number of resources applicable to all groups of resource indication information reported by the CSI. The network device may also indicate a number of resources for each group of resource indication information.
(5) A maximum number of resources indicated by one group of the resource indication information. The terminal determines a maximum number of resources corresponding to each group of resource indication information in the CSI report based on the maximum number of resources. A number of resources indicated by each group of resource indication information may be the same or different. The network device may indicate a maximum number of resources, which is applicable to all reported groups of resource indication information. The network device may also indicate a maximum number of resources for each group of resource indication information.

In an embodiment, one group of resource indication information corresponds to one group of beams and/or corresponds to one group of resources (including SSB resources, CSI-RS resources, etc.). In an embodiment, all resources in one group of resources are different. Similarly, for each group of beams, the network device may indicate a corresponding number of resources/number of beams. For example, the network device may indicate one number of resources, which is applicable to all reported beam groups. The network device may also indicate a corresponding number of resources for each beam group.

Furthermore, the first indication information may be indicated or configured in a CSI report configuration (CSI-ReportConfig), a CSI resource setting, a CSI report configuration, etc. The first indication information may be carried in the CSI report indication information, or may be independent from the CSI report indication information.

In the method for CSI reporting provided by the embodiments of the present application, when determining the CSI report, the terminal determines the information that needs to be reported based on and assisted by the indication information transmitted from the network device, such as multiple groups of resource indication information, the network device may determine the resources capable of being used for uplink simultaneous transmission based on the multiple groups of resource indication information, and the terminal and the network device reach a consensus on which resources are capable of being used for uplink simultaneous transmission, which prevents the network devices from indicating resources that cannot be used simultaneously during uplink simultaneous transmissions.

In an embodiment, in step 102, transmitting the one or more CSI reports to the network device includes:
determining the multiple groups of resource indication information, and transmitting one or more CSI reports including the multiple groups of resource indication information to the network device.

In an embodiment, the terminal needs to first determine the multiple groups of resource indication information before transmitting the one or more CSI reports including the multiple groups of resource indication information to the network device. The terminal may determine the multiple groups of resource indication information by itself, or determine the multiple groups of resource indication information based on indication of the network device.

In an embodiment, the one or more CSI reports transmitted from the terminal to the network device further include second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, where any two resources indicated inter the at least two groups of resource indication information are capable of being used for uplink simultaneous transmission.

In an embodiment, in case that the terminal determines multiple groups of resource indication information by itself, the terminal transmits a CSI report to the network device, and the CSI report may also include one or more of the following.
(1) Whether the one or more CSI reports are capable of being used for uplink simultaneous transmission. In an embodiment, in case that the terminal transmits information to indicate the network device that one or more CSI reports may be used for uplink simultaneous transmission, the one or more CSI reports reported by the terminal may ensure that any two resources indicated inter at least two groups of resource indication information in the multiple groups of resource indication information may be used for uplink simultaneous transmission. Furthermore, the terminal may also indicate whether beams corresponding to one or more CSI reports, or resources corresponding to one or more CSI reports, may be used for uplink simultaneous transmission.
(2) Whether one or more groups of resources indicated by the multiple groups of resource indication information are capable of being used for uplink simultaneous transmission. In an embodiment, in case that the terminal transmits information to indicate the network device that one or more groups of resources indicated by multiple groups of resource indication information may be used for uplink simultaneous transmission, the CSI report reported by the terminal may ensure that any two resources indicated inter at least two groups of resource indication information in the multiple groups of resource indication information may be used for uplink simultaneous transmission.
(3) Uplink transmission related information corresponding to the one or more CSI reports. In an embodiment, the terminal may transmit information to indicate the network device the uplink transmission related information corresponding to the CSI report. In case that the terminal reports multiple CSI reports, the uplink transmission related information of different CSI reports may be the same or different. Furthermore, the uplink transmission related information corresponding to the CSI report may be uplink transmission related information corresponding to a beam group or resource group corresponding to the CSI report.
(4) Uplink transmission related information corresponding to one or more groups of the resource indication information. In an embodiment, for each group of resource indication information, the terminal may transmit information to indicate the network device the uplink transmission related information corresponding to one or more groups of resource indication information. The uplink transmission related information corresponding to different groups may be the same or different. Any two resources indicated inter two groups of resource indication information corresponding to different uplink transmission related information may be used for uplink simultaneous transmission.
(5) Uplink transmission related information corresponding to one or more groups of the resource indication information corresponding to different resource settings. In an embodiment, for each group of resource indication information, corresponding resource settings may be the same or different. The terminal may transmit information to indicate the network device uplink transmission related information corresponding to one or more groups of network resource indication information corresponding to different resource settings. In an embodiment, any two resources indicated inter resource settings corresponding to different uplink transmission related information may be used for uplink simultaneous transmission.
(6) Uplink transmission related information corresponding to one or more groups of the resource indication information corresponding to different resource sets. In an embodiment, for each group of resource indication information, corresponding resource sets may be the same or different. The terminal may transmit information to indicate the network device uplink transmission related information corresponding to one or more groups of network resource indication information corresponding to different resource sets. In an embodiment, any two resources indicated inter resource sets corresponding to different uplink transmission related information may be used for uplink simultaneous transmission.
(7) groups corresponding to the at least two groups of resource indication information, where any two resources indicated inter the at least two groups of resource indication information are capable of being used for uplink simultaneous transmission. Any two resources indicated inter at least two groups of resource indication information in multiple sets of resource indication information may be used for uplink simultaneous transmission. In an embodiment, the terminal may transmit information to indicate the network device the groups corresponding to at least two groups of resource indication information indicating inter group that any two resources are capable of being used for uplink simultaneous transmission, that is, inter which groups in the reported multiple groups of resource indication information any two resources may be used for uplink simultaneous transmission.

In the method for CSI reporting provided by the embodiments of the present application, in case that the terminal transmits the CSI report carrying multiple groups of resource indication information to the network device, the second indication information may also be carried in the CSI report to assist the network device in determining the resources that may be used for uplink simultaneous transmission, and the terminal and the network device reach a consensus on which resources are capable of being used for uplink simultaneous transmission, which prevents the network devices from indicating resources that cannot be used simultaneously during uplink simultaneous transmissions.

In an embodiment, determining the multiple groups of resource indication information includes:
determining the multiple groups of resource indication information based on third indication information transmitted from the network device,
where the third indication information is used to indicate one or more of the following:
   the one CSI report is used for uplink transmission;
   uplink transmission related information corresponding to one or more groups of resource indication information corresponding to the one CSI report;
   uplink transmission related information corresponding to at least one type of resource setting corresponding to the one CSI report; or
   uplink transmission related information corresponding to at least one resource set corresponding to the one CSI report.

In an embodiment, in case that the terminal performs one CSI reporting, multiple groups of beams or multiple groups of resources are reported in the one CSI reporting, and the one CSI reporting corresponds to one CSI report, the terminal may determine multiple groups of resource indication information based on the indication information transmitted from the network device, including:
the terminal determines multiple groups of resource indication information based on the third indication information transmitted from the network device, and the third indication information is used to indicate one or more of the following.
(1) The one CSI report is used for uplink transmission. In an embodiment, the network device indicates the terminal that the one CSI report is used for uplink transmission, and signaling parameters same as or different from signaling parameters for indicating the terminal to perform CSI reporting may be used. In response to the indication, the CSI reporting of the terminal may ensure that any two resources indicated inter at least two groups of resource indication information in the multiple groups of resource indication information may be used for uplink simultaneous transmission. In an embodiment, the one CSI report is used for uplink simultaneous transmission. In an embodiment, different beams corresponding to the one CSI report are used for uplink simultaneous transmission.
(2) Uplink transmission related information corresponding to one or more groups of resource indication information corresponding to the one CSI report. In an embodiment, the network device indicates the terminal the uplink transmission related information corresponding to the one or more groups of resource indication information corresponding to the one CSI report. The network device may indicate the terminal uplink transmission related information corresponding to each group of beams in the one CSI report, the uplink transmission related information corresponding to each group of beams may be the same or different, and beam groups corresponding to different uplink transmission related information may be used for uplink simultaneous transmission. One beam group corresponds to a group of resources and corresponds to a group of resource indication information, and the terminal thereby determines the multiple groups of resource indication information that need to be reported.
(3) Uplink transmission related information corresponding to at least one type of resource setting corresponding to the one CSI report. In an embodiment, the network device indicates the terminal the uplink transmission related information corresponding to one or more groups of resource indication information corresponding to the one CSI report. The one CSI report corresponds to multiple groups of beams or multiple groups of resources, the resource settings corresponding to each group of beams or each group of resources may be the same or different, and uplink transmission related information corresponding to different resource settings may be the same or different. The beam groups corresponding to resource settings corresponding to different uplink transmission related information may be used for uplink simultaneous transmission, one beam group corresponds to one group of resources and corresponds to a group of resource indication information, and the terminal thereby determines the multiple groups of resource indication information that need to be reported.
(4) Uplink transmission related information corresponding to at least one resource set corresponding to the one CSI report. In an embodiment, the network device indicates the terminal the uplink transmission related information corresponding to one or more groups of resource indication information corresponding to the one CSI report. The one CSI report corresponds to multiple groups of beams or multiple groups of resources, resource sets corresponding to each group of beams or each group of resources may be the same or different, and uplink transmission related information corresponding to different resource sets may be the same or different. The beam groups corresponding to resource sets corresponding to different uplink transmission related information may be used for uplink simultaneous transmission, one beam group corresponds to a group of resources and corresponds to a group of resource indication information, and the terminal thereby determines the multiple groups of resource indication information that need to be reported.

In the method for CSI reporting provided by the embodiments of the present application, the terminal determines the multiple groups of resource indication information based on the third indication information transmitted from the network device, and the multiple groups of resource indication information are carried in the CSI report transmitted to the network device. Any two resources indicated inter at least two groups of resource indication information in the multiple groups of resource indication information may be used for uplink simultaneous transmission, the network device may determine the resources capable of being used for uplink simultaneous transmission based on the multiple groups of resource indication information, and the terminal and the network device reach a consensus on which resources are capable of being used for uplink simultaneous transmission, which prevents the network devices from indicating resources that cannot be used simultaneously during uplink simultaneous transmissions.

In an embodiment, the third indication information may be carried in the CSI report indication information, or may be independent from the CSI report indication information.

In an embodiment, determining the multiple groups of resource indication information includes:
determining the multiple groups of resource indication information based on fourth indication information transmitted from the network device,
where the fourth indication information is used to indicate one or more of the following:
   the multiple CSI reports is used for uplink transmission;
   uplink transmission related information corresponding to at least one CSI report in the multiple CSI reports;
   uplink transmission related information corresponding to one or more groups of resource indication information corresponding to at least one CSI report in the multiple CSI reports;
   uplink transmission related information corresponding to a resource setting corresponding to at least one CSI report in the multiple CSI reports; or
   uplink transmission related information corresponding to a resource set corresponding to at least one CSI report in the multiple CSI reports.

In an embodiment, in case that the terminal performs multiple CSI reportings when performing CSI reporting, transmits multiple CSI reports, reports a group of beams or a group of resources in each CSI reporting, and each CSI reporting corresponds to a CSI report, the terminal may determine the multiple groups of resource indication information based on the indication information transmitted from the network device, including:
the terminal determines the multiple groups of resource indication information based on the fourth indication information transmitted from the network device, and the fourth indication information is used to indicate one or more of the following.
(1) The multiple CSI reports is used for uplink transmission. In an embodiment, the network device indicates the terminal that the multiple CSI reports are used for uplink transmission, and signaling parameters same as or different from signaling parameters for indicating the terminal to perform CSI reporting may be used. In response to the indication, the CSI reporting of the terminal may ensure that any two resources indicated inter at least two groups of resource indication information in the multiple groups of resource indication information may be used for uplink simultaneous transmission. In an embodiment, multiple CSI reports are used for uplink simultaneous transmission.
(2) Uplink transmission related information corresponding to at least one CSI report in the multiple CSI reports. In an embodiment, the network device indicates the terminal the uplink transmission related information corresponding to the at least one CSI report in the multiple CSI reports. One CSI report corresponds to one beam group. The network device may indicate the terminal the uplink transmission related information corresponding to each CSI report in the multiple CSI reports. The uplink transmission related information corresponding to each CSI report may be the same or different, the beam groups or resource groups corresponding to CSI reports corresponding to different uplink transmission related information may be used for uplink simultaneous transmission, and the terminal thereby determines the multiple groups of resource indication information that need to be reported.
(3) uplink transmission related information corresponding to one or more groups of resource indication information corresponding to at least one CSI report in the multiple CSI reports. In an embodiment, the network device indicates the terminal the uplink transmission related information corresponding to the at least one CSI report in the multiple CSI reports. One CSI report corresponds to one group of beams or one group of resources, corresponds to one group of resource indication information, and uplink transmission related information corresponding to multiple groups of beams or multiple groups of resources or multiple CSI reports or multiple resource indication information may be the same or different. The beam groups or resource groups corresponding to CSI reports corresponding to different uplink transmission related information may be used for uplink simultaneous transmission, and the terminal thereby determines the multiple groups of resource indication information that need to be reported.
(4) Uplink transmission related information corresponding to a resource setting corresponding to at least one CSI report in the multiple CSI reports. In an embodiment, the network device indicates the terminal the uplink transmission related information corresponding to the resource setting corresponding to the at least one CSI report in the multiple CSI reports. One CSI report corresponds to one group of beams or one group of resources, resource settings corresponding to multiple groups of beams or multiple groups of resources or multiple CSI reports may be the same or different, and uplink transmission related information corresponding to different resource settings may be the same or different. Beam groups or CSI reports corresponding to resource settings corresponding to different uplink transmission related information may be used for uplink simultaneous transmission. One beam group corresponds to one group of resources, corresponds to one group of resource indication information, and corresponds to one CSI report, the terminal thereby determines the multiple groups of resource indication information that need to be reported.
(5) Uplink transmission related information corresponding to a resource set corresponding to at least one CSI report in the multiple CSI reports. In an embodiment, the network device indicates the terminal the uplink transmission related information corresponding to the resource set corresponding to the at least one CSI report in the multiple CSI reports. The multiple CSI reports correspond to multiple groups of beams or multiple groups of resources, resource sets corresponding to each group of beams or each group of resources may be the same or different, and uplink transmission related information corresponding to different resource sets may be the same or different. Beam groups or CSI reports corresponding to resource sets corresponding to different uplink transmission related information may be used for uplink simultaneous transmission. One beam group corresponds to one group of resources, corresponds to one group of resource indication information, and corresponds to one CSI report, and the terminal thereby determines the multiple groups of resource indication information that need to be reported.

In an embodiment, the fourth indication information may be carried in the CSI report indication information, or may be independent from the CSI report indication information.

In the method for CSI reporting provided by the embodiments of the present application, the terminal determines the multiple groups of resource indication information based on the fourth indication information transmitted from the network device, and the multiple groups of resource indication information are carried in the CSI report transmitted to the network device. Any two resources indicated inter at least two groups of resource indication information in the multiple groups of resource indication information may be used for uplink simultaneous transmission, the network device may determine the resources capable of being used for uplink simultaneous transmission based on the multiple groups of resource indication information, and the terminal and the network device reach a consensus on which resources are capable of being used for uplink simultaneous transmission, which prevents the network devices from indicating resources that cannot be used simultaneously during uplink simultaneous transmissions.

In an embodiment, determining the multiple groups of resource indication information includes:
determining the multiple groups of resource indication information based on a report configuration transmitted from the network device,
where all resources configured by one report configuration correspond to same uplink transmission related information; or one report configuration corresponds to one or more types of resource setting, and all resources set by one type of resource setting correspond to same uplink transmission related information; or one report configuration configures one or more resource sets, and all resources included in one resource set correspond to same uplink transmission related information.

In an embodiment, CSI reporting associated setting information of the network device received by the terminal may be divided into different levels, namely, CSI report configuration, CSI resource setting, and CSI resource set.

One report configuration corresponds to one or more resource settings, that is, one or more resource settings are configured in one report configuration. One type of resource setting corresponds to one or more resource sets, that is, one or more resource sets are configured in one resource setting.

In case that the terminal performs one CSI reporting, reports multiple groups of beams or multiple groups of resources, and transmits one CSI report, the one CSI report corresponds to one report configuration, and resource settings corresponding to the multiple groups of beams or multiple groups of resources corresponding to the CSI report are the same or different; and resource sets corresponding to the multiple groups of beams or multiple groups of resources corresponding to the same resource setting are the same or different.

In case that the terminal performs multiple CSI reportings, each CSI reporting corresponds to one group of beams or one group of resources, and corresponds to one CSI report, the multiple CSI reportings correspond to a same or different report configuration, resource settings of all resources corresponding to the multiple CSI reportings corresponding to the same report configuration are the same or different, and resource sets corresponding to all resources corresponding to a same resource setting are the same or different.

The terminal may determine the multiple groups of resource indication information based on setting information of different levels transmitted from the network device, all resources corresponding to one report configuration correspond to same uplink transmission related information; or one report configuration corresponds to one or more types of resource settings, and all resources corresponding to one type of resource setting correspond to same uplink transmission related information; or one report configuration corresponds to one or more resource sets, and all resources in one resource set correspond to same uplink transmission related information.

In an embodiment, when performing CSI reporting, the terminal may report based on the report configuration, resource setting or resource set configured by the network device. That is, the uplink transmission related information transmitted from the terminal for CSI reporting may be a reporting per CSI reporting, or per CSI resource setting, or per CSI resource set.

In an embodiment, the uplink transmission related information includes one or more of the following.
(1) An antenna panel. For example, an identifier or index of antenna panel, a number of antenna panels, etc.
(2) A transmission and/or reception point. That is, in a multiple TRP scenario, an identifier or index, etc. that may indicate a TRP.
(3) A sounding reference signal resource set.
(4) An uplink transmission capability index. A capability corresponding to the uplink transmission capability index is a maximum number of SRS antenna ports that the antenna panel may support.
(5) An uplink transmission capability value.
(6) A control resource set pool. It may be a control resource set pool index (CORESETPoolIndex), etc.

The uplink transmission related information is used to indicate or characterize the information of the antenna panel.

In an embodiment, determining the multiple groups of resource indication information includes:
determining the multiple groups of resource indication information based on fifth indication information transmitted from the network device,
where the fifth indication information is used to indicate one or more of the following:
   an association relationship between report configurations corresponding to at least two groups of resource indication information in the multiple groups of resource indication information;
   an association relationship between resource settings corresponding to at least two groups of resource indication information in the multiple groups of resource indication information; or
   an association relationship between resource sets corresponding to at least two groups of resource indication information in the multiple groups of resource indication information.

In an embodiment, in case that multiple groups of beams or multiple groups of resources are reported in one CSI reporting, or multiple CSI reportings are performed and one group of beams or one group of resources is reported in one CSI reporting, the terminal may determine the multiple groups of resource indication information based on the indication information transmitted from the network device, including:
the terminal determines the multiple groups of resource indication information based on the fifth indication information transmitted from the network device, and the fifth indication information is used to indicate one or more of the following.
(1) An association relationship between report configurations corresponding to at least two groups of resource indication information in the multiple groups of resource indication information. The network device configures the association relationship between the report configurations at a same time or before indicating the terminal to perform CSI reporting. In case that multiple CSI reportings are performed, one group of beams is reported in one CSI reporting, report configurations corresponding to different CSI reports may be the same or different, report configurations with an association relationship correspond to at least two CSI reports, and any two resources corresponding to and inter at least two groups of resource indication information corresponding to at least two CSI reports may be used for uplink simultaneous transmission.
(2) An association relationship between resource settings corresponding to at least two groups of resource indication information in the multiple groups of resource indication information. The network device configures the association relationship between the resource settings at a same time or before indicating the terminal to perform CSI reporting. Any two resources inter at least two groups of resource indication information corresponding to the resource settings with an association relationship may be used for uplink simultaneous transmission.
(3) An association relationship between resource sets corresponding to at least two groups of resource indication information in the multiple groups of resource indication information. The network device configures the association relationship between the resource sets at a same time or before indicating the terminal to perform CSI reporting. Any two resources inter at least two groups of resource indication information corresponding to the resource sets with an association relationship may be used for uplink simultaneous transmission.

In an embodiment, the fifth indication information may be carried in the CSI report indication information, or may be independent from the CSI report indication information.

In an embodiment, the association relationship between the report configurations may be that the network device indicates a report configuration pair, and the report configurations indicated in pair have an association relationship. The same applies to replacing the report configuration with the resource setting or the resource set.

In an embodiment the association relationship between the report configurations may be that the network device indicates a parameter x with the same value. For example, in case that the parameter x included in multiple report configurations has the same value, it means that the multiple report configurations have an association relationship. The same applies to replacing the report configuration with the resource setting or the resource set.

In an embodiment, the association relationship between the report configurations may be that the network device indicates different uplink transmission related information, indicating that the resources/beams corresponding to the multiple report configurations may be used for uplink simultaneous transmission. The same applies to replacing the report configuration with the resource setting or the resource set.

In the method for CSI reporting provided by the embodiments of the present application, the terminal determines the multiple groups of resource indication information based on the fifth indication information transmitted from the network device, and the multiple groups of resource indication information are carried in the CSI report transmitted to the network device. Any two resources indicated inter at least two groups of resource indication information in the multiple groups of resource indication information may be used for uplink simultaneous transmission, the network device may determine the resources capable of being used for uplink simultaneous transmission based on the multiple groups of resource indication information, and the terminal and the network device reach a consensus on which resources are capable of being used for uplink simultaneous transmission, which prevents the network devices from indicating resources that cannot be used simultaneously during uplink simultaneous transmissions.

In an embodiment, the association relationship includes:
whether capable of being used for uplink simultaneous transmission; and/or
whether corresponding to same uplink transmission related information.

In an embodiment, the association relationship between report configurations, or the association relationship between resource settings, or the association relationship between resource sets may be whether they are capable of being used for uplink simultaneous transmission, and/or whether they correspond to the same uplink transmission related information.

In case that the network device indicates that the report configuration is capable of being used for uplink simultaneous transmission, it means that any two resources corresponding to and inter the report configurations may be used for uplink simultaneous transmission; in case that the network device indicates that the report configurations correspond to different uplink transmission related information, it means that any two resources corresponding to and inter the report configurations may be used for uplink simultaneous transmission. The same applies to replacing the report configuration with the resource setting or the resource set.

In an embodiment, two resources or two report configurations or two resource settings or two resource sets corresponding to different uplink transmission related information are capable of being used for uplink simultaneous transmission.

In an embodiment, in case that the uplink transmission related information corresponding to the two resources are different, it means that the two resources may be used for uplink simultaneous transmission. In case that the uplink transmission related information corresponding to the two report configurations are different, it means that the two report configurations, and any two resources inter the two report configurations may be used for uplink simultaneous transmission. In case that the uplink transmission related information corresponding to the two resource settings are different, it means that the two resource settings and any two resources inter the two resource settings may be used for uplink simultaneous transmission. In case that the uplink transmission related information corresponding to the two resource sets are different, it means that the two resource sets and any two resources inter the two resource sets may be used for uplink simultaneous transmission.

**In** an embodiment, the two report configurations or the two types of resource settings or the two resource sets are capable of being used for uplink simultaneous transmission includes:
any two resources respectively corresponding to the two report configurations or the two types of resource settings or the two resource sets are capable of being used for uplink simultaneous transmission.

**In** an embodiment, the two report configurations are capable of being used for uplink simultaneous transmission, and any two resources respectively corresponding to the two report configurations are capable of being used for uplink simultaneous transmission. The same applies to replacing the report configuration with the resource setting or the resource set.

**In** an embodiment, the two resources are capable of being used for uplink simultaneous transmission includes one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

In an embodiment, the two resources are capable of being used for uplink simultaneous transmission, which may be one or more of the following.
(1) Spatial relation filters corresponding to the two resources are capable of being used simultaneously. The terminal may use the spatial relation filters corresponding to the two resources for uplink simultaneous transmission. The spatial relation filters corresponding to the two resources may be one or more, and the spatial relation filters corresponding to the two resources may be the same or different.
(2) Uplink transmit beams corresponding to the two resources are capable of being used simultaneously. The terminal may use the beams corresponding to the two resources for uplink transmission.
(3) In case that the two resources are used as source reference resources for spatial relation information of a first signal, uplink simultaneous transmission of the first signal is capable to be performed based on the spatial relation information corresponding to the two resources.
(4) In case that the two resources are used as source reference resources for spatial relation information of a first resource, the spatial relation information corresponding to the two resources is capable of being used for uplink simultaneous transmission of a first signal corresponding to the first resource
(5) In case that the two resources are used as source reference resources for spatial relation information of a first resource, the spatial relation information corresponding to the two resources is capable of being used for uplink simultaneous transmission of a first signal corresponding to the first resource in a space division multiplexing (SDM) or a frequency division multiplexing (FDM) way.

In (3)-(5), the first signal may be a physical uplink shared channel (PUSCH), a physical uplink control channel (PUCCH), an SRS, a physical random access channel (PRACH), etc. The spatial relation information may be a spatial relation filter, etc.

(6) Two uplink signals corresponding to the two resources are capable of simultaneous transmission. It is applicable to multiple TRPs in a multi-downlink control information (M-DCI) scenario. The two uplink signals may be the same or different, for example, both uplink signals are one of PUSCH, PUCCH, SRS, or PRACH, or one uplink signal is one of PUSCH, PUCCH, SRS, or PRACH, and the other uplink signal is another of PUSCH, PUCCH, SRS, or PRACH.

(7) Receive antennas corresponding to the two resources are different. In an embodiment, uplink receive antennas corresponding to the two resources are different. In an embodiment, downlink receive antennas corresponding to the two resources are different.

In the method for CSI reporting provided by the embodiments of the present application, when the terminal transmits the CSI report to the network device based on the CSI report indication information transmitted from the network device, multiple groups of resource indication information are carried in the CSI report, and any two resources indicated inter at least two groups of resource indication information in the multiple groups of resource indication information may be used for uplink simultaneous transmission. The network device may determine the resources capable of being used for uplink simultaneous transmission based on the multiple groups of resource indication information, and the terminal and the network device reach a consensus on which resources are capable of being used for uplink simultaneous transmission, which prevents the network devices from indicating resources that cannot be used simultaneously during uplink simultaneous transmissions.

FIG. 2 is a second schematic flowchart of a method for CSI reporting according to an embodiment of the present application. As shown in FIG. 2, the method is performed by a network device, such as a base station, etc. The method at least includes the following steps:
step 201: receiving one or more CSI reports transmitted from a terminal based on CSI report indication information, where the one or more CSI reports include multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources; and
step 202: determining two resources capable of being used for uplink simultaneous transmission based on the multiple groups of resource indication information.

In an embodiment, the network device transmits the CSI report indication information to the terminal, and then receives the CSI report transmitted from the terminal. The CSI report transmitted from the terminal is triggered and generated after the terminal receives the CSI report indication information, which includes multiple groups of resource indication information. Any two resources indicated inter at least two groups of resource indication information in the multiple groups of resource indication information may be used for uplink simultaneous transmission. One group of resource indication information is used to indicate one group of resources or multiple resources.

The network device determines which resources may be used for uplink simultaneous transmission based on the multiple groups of resource indication information included in the CSI report to avoid the uplink simultaneous transmission indicating resources that cannot be used simultaneously.

In the method for CSI reporting provided in the embodiments of the present application, the network device receives the CSI report carrying multiple groups of resource indication information transmitted from the terminal, and any two resources indicated inter at least two groups of resource indication information in the multiple groups of resource indication information may be used for uplink simultaneous transmission. The network device may determine the resources capable of being used for uplink simultaneous transmission based on the multiple groups of resource indication information, and the terminal and the network device reach a consensus on which resources are capable of being used for uplink simultaneous transmission, which prevents the network devices from indicating resources that cannot be used simultaneously during uplink simultaneous transmissions.

In an embodiment, the multiple groups of resource indication information are determined by the terminal.

In an embodiment, receiving the one or more CSI reports transmitted from the terminal based on the CSI report indication information, where the one or more CSI reports include the multiple groups of resource indication information, includes:
receiving one CSI report transmitted from the terminal based on the CSI report indication information, where the one CSI report includes multiple groups of resource indication information.

In an embodiment, receiving the one or more CSI reports transmitted from the terminal based on the CSI report indication information, where the one or more CSI reports include the multiple groups of resource indication information, includes:
receiving multiple CSI reports transmitted from the terminal based on the CSI report indication information, where the multiple CSI reports include multiple groups of resource indication information, and different CSI reports include different groups of resource indication information.

In an embodiment, the method further includes:
transmitting first indication information to the terminal, where the first indication information is used to indicate one or more of the following:
a number of groups of the at least two groups of resource indication information;
a number of groups of the multiple groups of resource indication information;
a number of the one or more CSI reports;
a number of resources indicated by one group of the resource indication information; or
a maximum number of resources indicated by one group of the resource indication information.

In an embodiment, the one or more CSI reports further include second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, where any two resources indicated inter the at least two groups of resource indication information are capable of being used for uplink simultaneous transmission.

In an embodiment, the method further includes:
transmitting third indication information to the terminal,
where the third indication information is used to indicate one or more of the following:
   the one CSI report is used for uplink transmission;
   uplink transmission related information corresponding to one or more groups of resource indication information corresponding to the one CSI report;
   uplink transmission related information corresponding to at least one type of resource setting corresponding to the one CSI report; or
   uplink transmission related information corresponding to at least one resource set corresponding to the one CSI report.

The third indication information is used by the terminal to determine the CSI report. In an embodiment, the third indication information is used by the terminal to determine multiple groups of resource indication information.

In an embodiment, the method further includes:
transmitting fourth indication information to the terminal,
where the fourth indication information is used to indicate one or more of the following:
   the multiple CSI reports is used for uplink transmission;
   uplink transmission related information corresponding to at least one CSI report in the multiple CSI reports;
   uplink transmission related information corresponding to one or more groups of resource indication information corresponding to at least one CSI report in the multiple CSI reports;
   uplink transmission related information corresponding to a resource setting corresponding to at least one CSI report in the multiple CSI reports; or
   uplink transmission related information corresponding to a resource set corresponding to at least one CSI report in the multiple CSI reports.

The fourth indication information is used by the terminal to determine the CSI report. In an embodiment, the fourth indication information is used by the terminal to determine multiple groups of resource indication information.

In an embodiment, the method further includes:
transmitting a report configuration to the terminal,
where all resources configured by one report configuration correspond to same uplink transmission related information; or one report configuration includes one or more types of resource setting, and all resources set by one type of resource setting correspond to same uplink transmission related information; or one report configuration configures one or more resource sets, and all resources included in one resource set correspond to same uplink transmission related information.

The report configuration is used by the terminal to determine the CSI report. In an embodiment, the report configuration is used by the terminal to determine multiple groups of resource indication information.

In an embodiment, the uplink transmission related information includes one or more of the following:
an antenna panel;
a transmission and/or reception point;
a sounding reference signal resource set;
an uplink transmission capability index;
an uplink transmission capability value; or
a control resource set pool.

In an embodiment, the method further includes:
transmitting fifth indication information to the terminal, where the fifth indication information is used to indicate one or more of the following:
an association relationship between report configurations corresponding to at least two groups of resource indication information in the multiple groups of resource indication information;
an association relationship between resource settings corresponding to at least two groups of resource indication information in the multiple groups of resource indication information; or
an association relationship between resource sets corresponding to at least two groups of resource indication information in the multiple groups of resource indication information.

The fifth indication information is used by the terminal to determine the CSI report. In an embodiment, the fifth indication information is used by the terminal to determine multiple groups of resource indication information.

In an embodiment, the association relationship includes:
whether capable of being used for uplink simultaneous transmission; and/or
whether corresponding to same uplink transmission related information.

In an embodiment, two resources or two report configurations or two resource settings or two resource sets corresponding to different uplink transmission related information are capable of being used for uplink simultaneous transmission.

In an embodiment, the two report configurations or the two types of resource settings or the two resource sets are capable of being used for uplink simultaneous transmission includes:
any two resources respectively corresponding to the two report configurations or the two types of resource settings or the two resource sets are capable of being used for uplink simultaneous transmission.

In an embodiment, the two resources are capable of being used for uplink simultaneous transmission includes one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

The methods provided by the embodiments of the present application are based on the same conception, the implementation and beneficial effects of the methods performed by the terminal side and network device side may be referred to each other, and the same part is not repeated.

The solution of the embodiments of the present application is further described below through several specific examples.

The following examples are described using resource indication information as a downlink resource identifier.

Example one: multiple groups of beams are reported in one CSI reporting.

Step 1: a base station indicates a UE to perform CSI reporting, and the CSI reporting corresponds to one CSI report configuration.

Step 2: in response to the indication of the base station, the UE reports N groups of downlink (DL) resource identifiers (i.e., N groups of beam reporting), and uplink (UL) beams corresponding to any two DL resource identifiers inter the N groups may be used for uplink transmission at the same time. N is an integer greater than or equal to 2.

In Example one, among the N groups corresponding to the one CSI reporting, the UL beams corresponding to any two DL resource identifiers inter at least two groups may be used for uplink simultaneous transmission.

In an embodiment, all CRIs and SSBRIs in one group are different.

In an embodiment, the base station also indicates a number of reference signal resources corresponding to each beam group, which may be indicated in step 1 or independently from step 1.

In an embodiment, the base station indicates a number of reference signal resource applicable to all reported beam groups. In an embodiment, the base station indicates the number of reference signal resource for each beam group respectively.

In an embodiment, the number of groups (N) reported by the UE is indicated by the base station. For example, it is configured in a CSI report configuration, or in a CSI resource setting, or in a CSI resource set.

In an embodiment, the number of groups (N) reported by the UE is pre-determined. For example, it is agreed to be 2 in a protocol.

In an embodiment, the number of groups (N) reported by the UE is reported by the UE to the base station.

Some optional schemes based on Example one are as follows.

1-1: in an embodiment, in step 1, the base station also indicates to the UE that the CSI reporting is a CSI reporting for uplink transmission (which may be indicated by the same signaling parameter as the one used to indicate the UE to perform CSI reporting or by a different signaling parameter). In response to the indication, a reporting of the UE ensures that UL beams corresponding to any two DL resource identifiers inter groups may be used for uplink transmission at the same time.

1-2: in an embodiment, the UE also transmits information indicating whether the CSI reporting may be used for uplink simultaneous transmission. In case that the information indicates that the CSI reporting is used for uplink simultaneous transmission, a reporting of the UE ensures that UL beams corresponding to any two DL resource identifiers inter the N groups may be used for uplink transmission at the same time. In an embodiment, the UE also transmits information indicating whether the N groups may be used for uplink simultaneous transmission. In case that the information indicates that the N groups are used for uplink simultaneous transmission, a reporting of the UE ensures that UL beams corresponding to any two DL resource identifiers inter the N groups may be used for uplink transmission at the same time.

The above information may be transmitted in step 2 or independently from step 2.

1-3: in an embodiment, the UE reports uplink transmission related information corresponding to each group. UL beams corresponding to any two DL resources inter two groups of reportings corresponding to different uplink transmission related information may be used for uplink transmission at the same time.

In an embodiment, the base station also indicates to the UE that the CSI reporting is a CSI reporting for uplink transmission. In response to the indication, the UE reports the uplink transmission related information corresponding to each group.

The uplink transmission related information corresponding to the group may be reported in step 2 or independently from step 2.

1-4: in an embodiment, different groups correspond to different CSI resource sets. The UE also reports uplink transmission related information corresponding to each CSI resource set corresponding to the CSI reporting. UL beams corresponding to any two DL resources from different CSI resource sets may be used for uplink transmission at the same time. In an embodiment, the base station also indicates to the UE that the CSI reporting is a CSI reporting for uplink transmission. In response to the indication, the UE reports the uplink transmission related information corresponding to each CSI resource set. The uplink transmission related information corresponding to a group may be reported in step 2 or independently from step 2.

1-5: in an embodiment, different groups correspond to different resource settings. The UE also reports uplink transmission related information corresponding to various resource settings. UL beams corresponding to any two DL resources corresponding to different resource settings may be used for uplink transmission at the same time.

In an embodiment, the base station also indicates to the UE that the CSI reporting is a CSI reporting for uplink transmission. In response to the indication, the UE reports the uplink transmission related information corresponding to each resource setting.

The uplink transmission related information corresponding to a group may be reported in step 2 or independently from step 2.

For the above schemes (except 1-4): in an embodiment, all groups correspond to a same CSI resource setting of the report configuration. That is, DL resource identifiers in all groups indicate the DL RS (CSI-RS or SSB) in a same CSI resource setting corresponding to the report configuration.

In an embodiment, different groups correspond to different CSI resources of the report configuration. That is, DL resource identifiers in two groups should respectively indicate DL RSs (CSI-RSs or SSBs) in two CSI resource sets. One way is that the UE reports (that is, beam reporting) the DL resource identifiers for different CSI resource sets.

In an embodiment, different groups correspond to different resource settings of the report configuration. One way is that the UE reports the DL resource identifiers (ie, beam reporting) for different resource settings respectively.

Example two: one group of beams are reported in one CSI reporting, beams in multiple CSI reportings may be used for uplink simultaneous transmission, and a UE determines which CSI reportings may be transmitted simultaneously.

Step 1: a base station indicates the UE to perform CSI reporting, and one CSI reporting corresponds to one CSI reporting setting.

Step 2: in response to the indication of the base station, for one CSI reporting, the UE reports a group of DL resource identifiers and reports uplink transmission related information corresponding to the CSI reporting. UL beams corresponding to any two DL resources inter two groups of reportings corresponding to different uplink transmission related information may be used for uplink transmission at the same time.

Example 1: taking uplink transmission information as a capability index value as an example, it is assumed that a capability index value reported by CSI reporting 1 is Index 1 and a capability index value reported by CSI reporting 2 is Index 2, then a UL beam corresponding to any DL resource reported by CSI reporting 1 and a UL beam corresponding to any DL resource reported by CSI reporting 2 may be used for uplink transmission at the same time.

Example 2: it is assumed that a capability index value reported by CSI reporting 1 is Index 1 and a capability index value reported by CSI reporting 2 is Index 1, then a UL beam corresponding to any DL resource reported by CSI reporting 1 and a UL beam corresponding to any DL resource reported by CSI reporting 2 are considered not to be used for uplink transmission at the same time.

CSI reporting 1 indicates that its corresponding CSI report configuration corresponds to identifier 1, and CSI reporting 2 indicates that its corresponding CSI report configuration corresponds to identifier 2. UL beam corresponding to CSI reporting may be indicated by CRI and/or SSB in CSI reporting.

In an embodiment, the base station also indicates a number of reference signal resources corresponding to each beam group, which may be indicated in step 1 or independently from step 1. In an embodiment, the base station indicates a number of reference signal resources applicable to all reported beam groups. In an embodiment, the base station indicates a number of reference signal resources for each beam group.

In an embodiment, in step 1, the base station indicates the UE to perform CSI reporting for uplink transmission. In response to the indication, the UE reports uplink transmission information corresponding to the CSI reporting.

In an embodiment, UL beams corresponding to any two DL resources corresponding to different uplink transmission related information may be used for uplink transmission at the same time.

In an embodiment, uplink transmission related information corresponding to a CSI reporting is reported per CSI reporting. Uplink transmission related information may be reported for one or more CSI reports, and same or different uplink transmission related information may be reported in two CSI reports. Uplink transmission related information corresponding to multiple CSI reports may be reported independently or jointly. The uplink transmission related information corresponding to multiple CSI reports may be reported in one signaling, or in multiple signalings. The uplink transmission related information corresponding to multiple CSI reports may be reported in one resource, or in multiple resources (for example, reported through two PUSCHs respectively). In an embodiment, all reference signal resources in one CSI report correspond to same uplink transmission related information. In an embodiment, all reference signal resources reporting, whose identifiers and/or channel qualities are reported, in one CSI report correspond to same uplink transmission related information.

In an embodiment, uplink transmission related information corresponding to a CSI reporting is reported per CSI resource set. Uplink transmission related information may be reported for one or more CSI resource sets, and two CSI resource sets may report same or different uplink transmission related information. Uplink transmission related information corresponding to multiple CSI resource sets may be reported independently or jointly. The uplink transmission related information corresponding to multiple CSI resource sets may be reported in one signaling, or in multiple signalings. The uplink transmission related information corresponding to multiple CSI resource sets may be reported in one resource, or reported in multiple resources (for example, reported through two PUSCHs respectively).

In an embodiment, all reference signal resources in a CSI resource set correspond to same uplink transmission related information.

In an embodiment, all reference signal resources in a CSI resource set, whose identifiers and/or channel qualities are reported, correspond to same uplink transmission related information.

In an embodiment, uplink transmission related information corresponding to a CSI reporting is reported per resource setting, that is, it is indicated respectively for various types of resource settings. Uplink transmission related information may be reported for one or more types of resource settings, and two types of resource settings may report same or different uplink transmission related information. Uplink transmission related information corresponding to multiple types of resource settings may be reported independently or jointly. The uplink transmission related information corresponding to multiple types of resource settings may be reported in one signaling, or reported in multiple signalings. The uplink transmission related information corresponding to multiple types of resource settings may be reported in one resource, or reported in multiple resources (for example, reported through two PUSCHs respectively). In an embodiment, all reference signal resources in one resource setting correspond to same uplink transmission related information. In an embodiment, all reference signal resources, whose identifiers and/or channel qualities are reported, in one type of resource setting correspond to same uplink transmission related information. The reporting may be in step 2 or independent from step 2.

Example three: one group of beams are reported in one CSI reporting, and beams in multiple CSI reportings may be used for uplink simultaneous transmission, and a base station dominates an antenna panel association relationship.

Step 1: the base station indicates a UE to perform CSI reporting, and one CSI reporting corresponds to one CSI report configuration. When indicating the UE to perform CSI reporting, the base station indicates uplink transmission related information corresponding to the CSI reporting, or uplink transmission related information corresponding to the CSI reporting is included in configuration information of the CSI reporting.

Step 2: the UE reports DL resource identifiers based on the indication of the base station. UL beams corresponding to any two DL resources inter two groups of reportings corresponding to different uplink transmission related information may be used for uplink transmission at the same time, and/or UL beams corresponding to any two DL resources inter CSI reports corresponding to different uplink transmission related information may be used for uplink transmission at the same time.

Any optional scheme in example two is also applicable to example three, which is not repeated here.

Example four: one group of beams are reported in one CSI reporting, and beams in multiple CSI reportings may be used for uplink simultaneous transmission, and a base station dominates an antenna panel association relationship.

Step 1: the base station indicates a UE to perform CSI reporting, and one CSI reporting corresponds to one CSI report configuration. Before step 1 or in step 1, the base station configures a association relationship between CSI reports.

Step 2: the UE reports DL resource identifiers based on the indication of the base station. UL beams corresponding to any two reported DL resources inter two CSI reports with an association relationship may be used for uplink transmission at the same time, and/or UL beams corresponding to any two DL resources inter two CSI reports with an association relationship may be used for uplink transmission at the same time.

Any optional scheme in example two is also applicable to example four, which is not repeated here.

Furthermore, the base station transmits a CSI report configuration to the terminal, and indicates the UE to perform a CSI reporting corresponding to the CSI report configuration.

The CSI report configuration may be transmitted to the terminal before or at the same time as indicating the UE to perform CSI reporting corresponding to the CSI report configuration. The CSI report configuration may be transmitted through a same signaling or different signalings.

In an embodiment, in case that the CSI report configuration indicates that a CSI reporting is a periodic reporting, the CSI report configuration also indicates the UE to perform CSI reporting corresponding to the CSI report configuration.

The UE reports DL resource identifiers based on the indication of the base station. UL beams corresponding to any two reported DL resources inter two CSI reports with an association relationship may be used for uplink transmission at the same time, and/or UL beams corresponding to any two DL resources inter two CSI reports with an association relationship may be used for uplink transmission at the same time.

In an embodiment, whether two CSI reports have an association relationship is indicated by the base station. For example, the base station indicates some CSI report pairs (for example, some identifier pairs for CSI report configuration are indicated), and reports corresponding to CSI report configurations indicated in pairs are CSI reports with an association relationship. For another example, the base station indicates some CSI report groups (for example, some identifier groups for CSI report configuration are indicated), and reports corresponding to CSI report configurations in a same group are CSI reports with an association relationship

In an embodiment, two CSI reports have an association relationship refers to that they are indicated with a parameter x with a same value. For example, the parameter x (x is only an example, and the parameter may also be represented as an antenna panel identifier or an association relationship table (RelationInfo), etc.) included in their corresponding CSI report configurations have the same value.

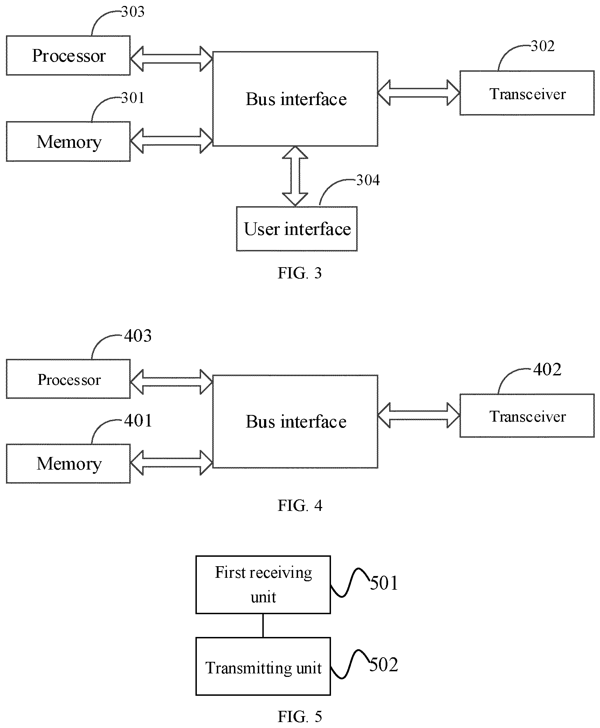

FIG. 3 is a schematic structural diagram of a terminal according to an embodiment of the present application. As shown in FIG. 3, the terminal includes a memory 301, a transceiver 302 and a processor 303, where
the memory 301 is used for storing a computer program, and the transceiver 302 is used for receiving and transmitting data under control of the processor 303.

In an embodiment, the transceiver 302 is used for receiving and transmitting data under control of the processor 303.

In FIG. 3, a bus architecture may include any number of interconnected buses and bridges, which are linked together through various circuits of one or more processors represented by the processor 303 and one or more memories represented by the memory 301. The bus architecture may also link together various other circuits, such as peripherals, voltage regulators, and power management circuits, etc., which are well known in the art, and therefore are not further described in the present application. The bus interface provides an interface. The transceiver 302 may include multiple elements, i.e., including a transmitter and a receiver, units for providing communication with various other devices over transmission media including wireless channels, wired channels, fiber optic cables, and the like. For different user equipment, a user interface 304 may be an interface capable of externally or internally connecting the required equipment, and the connected equipment includes, but not limited to, a keypad, a display, a speaker, a microphone, a joystick, and the like.

The processor 303 is responsible for managing the bus architecture and general processing, and the memory 301 may store data used by the processor 303 when performing operations.

In an embodiment, the processor 303 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to execute any of the methods provided by the embodiments of the present application in accordance with the obtained executable instructions. The processor and the memory may be physically arranged separately.

The processor 303 is used to read the computer program in the memory 301 and perform the following operations:
receiving CSI report indication information transmitted from a network device; and
transmitting one or more CSI reports to the network device based on the CSI report indication information, where the one or more CSI reports include multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources.

In an embodiment, transmitting the one or more CSI reports to the network device includes:
determining the multiple groups of resource indication information, and transmitting one or more CSI reports including the multiple groups of resource indication information to the network device.

In an embodiment, transmitting the one or more CSI reports to the network device based on the CSI report indication information, where the one or more CSI reports include the multiple groups of resource indication information, includes:
at least two groups of resource indication information correspond to multiple CSI reports, transmitting one CSI report to the network device based on the CSI report indication information, where the one CSI report includes multiple groups of resource indication information.

In an embodiment, transmitting the one or more CSI reports to the network device based on the CSI report indication information, where the one or more CSI reports include the multiple groups of resource indication information, includes:
transmitting multiple CSI reports to the network device based on the CSI report indication information, where the multiple CSI reports include multiple groups of resource indication information, and different CSI reports include different groups of resource indication information.

In an embodiment, the processor 303 is used to read the computer program in the memory 301 and further perform the following operations:
receiving first indication information transmitted from the network device,
where the first indication information is used to indicate one or more of the following:
   a number of groups of the at least two groups of resource indication information;
   a number of groups of the multiple groups of resource indication information;
   a number of the one or more CSI reports;
   a number of resources indicated by one group of the resource indication information; or
   a maximum number of resources indicated by one group of the resource indication information.

In an embodiment, the one or more CSI reports further include second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, where any two resources indicated inter the at least two groups of resource indication information are capable of being used for uplink simultaneous transmission.

In an embodiment, determining the multiple groups of resource indication information includes:
determining the multiple groups of resource indication information based on third indication information transmitted from the network device,
where the third indication information is used to indicate one or more of the following:
   the one CSI report is used for uplink transmission;
   uplink transmission related information corresponding to one or more groups of resource indication information corresponding to the one CSI report;
   uplink transmission related information corresponding to at least one type of resource setting corresponding to the one CSI report; or
   uplink transmission related information corresponding to at least one resource set corresponding to the one CSI report.

In an embodiment, determining the multiple groups of resource indication information includes:
determining the multiple groups of resource indication information based on fourth indication information transmitted from the network device,
where the fourth indication information is used to indicate one or more of the following:
   the multiple CSI reports is used for uplink transmission;
   uplink transmission related information corresponding to at least one CSI report in the multiple CSI reports;
   uplink transmission related information corresponding to one or more groups of resource indication information corresponding to at least one CSI report in the multiple CSI reports;
   uplink transmission related information corresponding to a resource setting corresponding to at least one CSI report in the multiple CSI reports; or
   uplink transmission related information corresponding to a resource set corresponding to at least one CSI report in the multiple CSI reports.

In an embodiment, determining the multiple groups of resource indication information includes:
determining the multiple groups of resource indication information based on a report configuration transmitted from the network device,
where all resources configured by one report configuration correspond to same uplink transmission related information; or one report configuration corresponds to one or more types of resource setting, and all resources set by one type of resource setting correspond to same uplink transmission related information; or one report configuration configures one or more resource sets, and all resources included in one resource set correspond to same uplink transmission related information.

In an embodiment, the uplink transmission related information includes one or more of the following:
an antenna panel;
a transmission and/or reception point;
a sounding reference signal resource set;
an uplink transmission capability index;
an uplink transmission capability value; or
a control resource set pool.

In an embodiment, determining the multiple groups of resource indication information includes:
determining the multiple groups of resource indication information based on fifth indication information transmitted from the network device,
where the fifth indication information is used to indicate one or more of the following:
   an association relationship between report configurations corresponding to at least two groups of resource indication information in the multiple groups of resource indication information;
   an association relationship between resource settings corresponding to at least two groups of resource indication information in the multiple groups of resource indication information; or
   an association relationship between resource sets corresponding to at least two groups of resource indication information in the multiple groups of resource indication information.

In an embodiment, the association relationship includes:
whether capable of being used for uplink simultaneous transmission; and/or
whether corresponding to same uplink transmission related information.

In an embodiment, two resources or two report configurations or two resource settings or two resource sets corresponding to different uplink transmission related information are capable of being used for uplink simultaneous transmission.

In an embodiment, the two report configurations or the two types of resource settings or the two resource sets are capable of being used for uplink simultaneous transmission includes:
any two resources respectively corresponding to the two report configurations or the two types of resource settings or the two resource sets are capable of being used for uplink simultaneous transmission.

In an embodiment, the two resources are capable of being used for uplink simultaneous transmission includes one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

It should be noted here that the above terminal provided by the embodiments of the present application may implement all the method steps performed by the terminal in the above method embodiments, and may achieve the same effect. The same parts and beneficial effects as the same method embodiments are not repeated in the present application.

FIG. 4 is a schematic structural diagram of a network device according to an embodiment of the present application. As shown in FIG. 4, the network device includes a memory 401, a transceiver 402 and a processor 403, where
the memory 401 is used for storing a computer program, and the transceiver 402 is used for receiving and transmitting data under control of the processor 403.

In an embodiment, the transceiver 402 is used for receiving and transmitting data under control of the processor 403.

In FIG. 4, a bus architecture may include any number of interconnected buses and bridges, which are linked together through various circuits of one or more processors represented by the processor 403 and one or more memories represented by the memory 401. The bus architecture may also link together various other circuits, such as peripherals, voltage regulators, and power management circuits, etc., which are well known in the art, and therefore are not further described in the present application. The bus interface provides an interface. The transceiver 402 may include multiple elements, i.e., including a transmitter and a receiver, units for providing communication with various other devices over transmission media including wireless channels, wired channels, fiber optic cables, and the like. The processor 403 is responsible for managing the bus architecture and general processing, and the memory 401 may store data used by the processor 403 when performing operations.

The processor 403 may be a central processing unit (CPU), an application specific integrated circuit (ASIC), a field-programmable gate array (FPGA), or a complex programmable logic device (CPLD), the processor may also use a multi-core architecture.

The processor 403 is used to read the computer program in the memory 401 and perform the following operations:
receiving a CSI report transmitted from a terminal based on CSI report indication information, where the CSI report include multiple groups of resource indication information, any two resources indicated inter at least two groups of resource indication information in the multiple groups of resource indication information are capable of being used for uplink simultaneous transmission; and
determining two resources capable of being used for uplink simultaneous transmission based on the multiple groups of resource indication information.

In an embodiment, the multiple groups of resource indication information are determined by the terminal.

In an embodiment, receiving the one or more CSI reports transmitted from the terminal based on the CSI report indication information, where the one or more CSI reports include the multiple groups of resource indication information, includes:
receiving one CSI report transmitted from the terminal based on the CSI report indication information, where the one CSI report includes multiple groups of resource indication information.

In an embodiment, receiving the one or more CSI reports transmitted from the terminal based on the CSI report indication information, where the one or more CSI reports include the multiple groups of resource indication information, includes:
receiving multiple CSI reports transmitted from the terminal based on the CSI report indication information, where the multiple CSI reports include multiple groups of resource indication information, and different CSI reports include different groups of resource indication information.

In an embodiment, the processor 403 is used to read the computer program in the memory 401 and further perform the following operations:
transmitting first indication information to the terminal, where the first indication information is used to indicate one or more of the following:
a number of groups of the at least two groups of resource indication information;
a number of groups of the multiple groups of resource indication information;
a number of the one or more CSI reports;
a number of resources indicated by one group of the resource indication information; or
a maximum number of resources indicated by one group of the resource indication information.

In an embodiment, the one or more CSI reports further include second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, where any two resources indicated inter the at least two groups of resource indication information are capable of being used for uplink simultaneous transmission.

In an embodiment, the processor 403 is used to read the computer program in the memory 401 and further perform the following operations:
transmitting third indication information to the terminal,
where the third indication information is used to indicate one or more of the following:
   the one CSI report is used for uplink transmission;
   uplink transmission related information corresponding to one or more groups of resource indication information corresponding to the one CSI report;
   uplink transmission related information corresponding to at least one type of resource setting corresponding to the one CSI report; or
   uplink transmission related information corresponding to at least one resource set corresponding to the one CSI report.

In an embodiment, the processor 403 is used to read the computer program in the memory 401 and further perform the following operations :
transmitting fourth indication information to the terminal,
where the fourth indication information is used to indicate one or more of the following:
   the multiple CSI reports is used for uplink transmission;
   uplink transmission related information corresponding to at least one CSI report in the multiple CSI reports;
   uplink transmission related information corresponding to one or more groups of resource indication information corresponding to at least one CSI report in the multiple CSI reports;
   uplink transmission related information corresponding to a resource setting corresponding to at least one CSI report in the multiple CSI reports; or
   uplink transmission related information corresponding to a resource set corresponding to at least one CSI report in the multiple CSI reports.

In an embodiment, the processor 403 is used to read the computer program in the memory 401 and further perform the following operations :
transmitting a report configuration to the terminal,
where all resources configured by one report configuration correspond to same uplink transmission related information; or one report configuration includes one or more types of resource setting, and all resources set by one type of resource setting correspond to same uplink transmission related information; or one report configuration configures one or more resource sets, and all resources included in one resource set correspond to same uplink transmission related information.

In an embodiment, the uplink transmission related information includes one or more of the following:
an antenna panel;
a transmission and/or reception point;
a sounding reference signal resource set;
an uplink transmission capability index;
an uplink transmission capability value; or
a control resource set pool.

In an embodiment, the processor 403 is used to read the computer program in the memory 401 and further perform the following operations :
transmitting fifth indication information to the terminal, where the fifth indication information is used to indicate one or more of the following:
an association relationship between report configurations corresponding to at least two groups of resource indication information in the multiple groups of resource indication information;
an association relationship between resource settings corresponding to at least two groups of resource indication information in the multiple groups of resource indication information; or
an association relationship between resource sets corresponding to at least two groups of resource indication information in the multiple groups of resource indication information.

In an embodiment, the association relationship includes:
whether capable of being used for uplink simultaneous transmission; and/or
whether corresponding to same uplink transmission related information.

In an embodiment, two resources or two report configurations or two resource settings or two resource sets corresponding to different uplink transmission related information are capable of being used for uplink simultaneous transmission.

In an embodiment, the two report configurations or the two types of resource settings or the two resource sets are capable of being used for uplink simultaneous transmission includes:
any two resources respectively corresponding to the two report configurations or the two types of resource settings or the two resource sets are capable of being used for uplink simultaneous transmission.

In an embodiment, the two resources are capable of being used for uplink simultaneous transmission includes one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

It should be noted here that the above network device provided by the embodiments of the present application may implement all the method steps performed by the network device in the above method embodiments, and may achieve the same effect. The same parts and beneficial effects as the same method embodiments are not repeated in the present application.

FIG. 5 is a first schematic structural diagram of an apparatus for CSI reporting according to an embodiment of the present application. As shown in FIG. 5, the apparatus includes:
a first receiving unit 501, used for receiving CSI report indication information transmitted from a network device; and
a transmitting unit 502, used for transmitting one or more CSI reports to the network device based on the CSI report indication information, where the one or more CSI reports include multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources.

In an embodiment, the transmitting unit 502 is used for:
determining the multiple groups of resource indication information, and transmitting one or more CSI reports including the multiple groups of resource indication information to the network device.

In an embodiment, the transmitting unit 502 is used for:
transmitting one CSI report to the network device based on the CSI report indication information, where the one CSI report includes multiple groups of resource indication information.

In an embodiment, the transmitting unit 502 is used for:
at least two groups of resource indication information correspond to multiple CSI reports, transmitting the multiple CSI reports to the network device, where the multiple CSI reports include multiple groups of resource indication information, and different CSI reports include different groups of resource indication information.

In an embodiment, the apparatus further includes:
a second receiving unit, used for receiving first indication information transmitted from the network device,
where the first indication information is used to indicate one or more of the following:
   a number of groups of the at least two groups of resource indication information;
   a number of groups of the multiple groups of resource indication information;
   a number of the one or more CSI reports;
   a number of resources indicated by one group of the resource indication information; or
   a maximum number of resources indicated by one group of the resource indication information.

In an embodiment, the one or more CSI reports further include second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, where any two resources indicated inter the at least two groups of resource indication information are capable of being used for uplink simultaneous transmission.

In an embodiment, the determining unit is used for:
determining the multiple groups of resource indication information based on third indication information transmitted from the network device,
where the third indication information is used to indicate one or more of the following:
   the one CSI report is used for uplink transmission;
   uplink transmission related information corresponding to one or more groups of resource indication information corresponding to the one CSI report;
   uplink transmission related information corresponding to at least one type of resource setting corresponding to the one CSI report; or
   uplink transmission related information corresponding to at least one resource set corresponding to the one CSI report.

In an embodiment, the determining unit is used for:
determining the multiple groups of resource indication information based on fourth indication information transmitted from the network device,
where the fourth indication information is used to indicate one or more of the following:
   the multiple CSI reports is used for uplink transmission;
   uplink transmission related information corresponding to at least one CSI report in the multiple CSI reports;
   uplink transmission related information corresponding to one or more groups of resource indication information corresponding to at least one CSI report in the multiple CSI reports;
   uplink transmission related information corresponding to a resource setting corresponding to at least one CSI report in the multiple CSI reports; or
   uplink transmission related information corresponding to a resource set corresponding to at least one CSI report in the multiple CSI reports.

In an embodiment, the determining unit is used for:
determining the multiple groups of resource indication information based on a report configuration transmitted from the network device,
where all resources configured by one report configuration correspond to same uplink transmission related information; or one report configuration corresponds to one or more types of resource setting, and all resources set by one type of resource setting correspond to same uplink transmission related information; or one report configuration configures one or more resource sets, and all resources included in one resource set correspond to same uplink transmission related information.

In an embodiment, the uplink transmission related information includes one or more of the following:
an antenna panel;
a transmission and/or reception point;
a sounding reference signal resource set;
an uplink transmission capability index;
an uplink transmission capability value; or
a control resource set pool.

In an embodiment, the determining unit is used for:
determining the multiple groups of resource indication information based on fifth indication information transmitted from the network device,
where the fifth indication information is used to indicate one or more of the following:
   an association relationship between report configurations corresponding to at least two groups of resource indication information in the multiple groups of resource indication information;
   an association relationship between resource settings corresponding to at least two groups of resource indication information in the multiple groups of resource indication information; or
   an association relationship between resource sets corresponding to at least two groups of resource indication information in the multiple groups of resource indication information.

In an embodiment, the association relationship includes:
whether capable of being used for uplink simultaneous transmission; and/or
whether corresponding to same uplink transmission related information.

In an embodiment, two resources or two report configurations or two resource settings or two resource sets corresponding to different uplink transmission related information are capable of being used for uplink simultaneous transmission.

In an embodiment, the two report configurations or the two types of resource settings or the two resource sets are capable of being used for uplink simultaneous transmission includes:
any two resources respectively corresponding to the two report configurations or the two types of resource settings or the two resource sets are capable of being used for uplink simultaneous transmission.

In an embodiment, the two resources are capable of being used for uplink simultaneous transmission includes one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

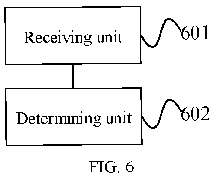

FIG. 6 is a second schematic structural diagram of an apparatus for CSI reporting according to an embodiment of the present application. As shown in FIG. 6, the apparatus includes:
a receiving unit 601, used for receiving a channel state information (CSI) report transmitted from a terminal based on CSI report indication information, where the CSI report include multiple groups of resource indication information, any two resources indicated inter at least two groups of resource indication information in the multiple groups of resource indication information are capable of being used for uplink simultaneous transmission; and
a determining unit 602, used for determining two resources capable of being used for uplink simultaneous transmission based on the multiple groups of resource indication information.

In an embodiment, the multiple groups of resource indication information are determined by the terminal.

In an embodiment, receiving the one or more CSI reports transmitted from the terminal based on the CSI report indication information, where the one or more CSI reports include the multiple groups of resource indication information, includes:
receiving one CSI report transmitted from the terminal based on the CSI report indication information, where the one CSI report includes multiple groups of resource indication information.

In an embodiment, receiving the one or more CSI reports transmitted from the terminal based on the CSI report indication information, where the one or more CSI reports include the multiple groups of resource indication information, includes:
receiving multiple CSI reports transmitted from the terminal based on the CSI report indication information, where the multiple CSI reports include multiple groups of resource indication information, the multiple CSI reports include multiple groups of resource indication information, and different CSI reports include different groups of resource indication information.

In an embodiment, the apparatus further includes:
a first transmitting unit, used for transmitting first indication information to the terminal, where the first indication information is used to indicate one or more of the following:
a number of groups of the at least two groups of resource indication information;
a number of groups of the multiple groups of resource indication information;
a number of the one or more CSI reports;
a number of resources indicated by one group of the resource indication information; or
a maximum number of resources indicated by one group of the resource indication information.

In an embodiment, the one or more CSI reports further include second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, where any two resources indicated inter the at least two groups of resource indication information are capable of being used for uplink simultaneous transmission.

In an embodiment, the apparatus further includes:
a second transmitting unit, used for transmitting third indication information to the terminal, and the third indication information is used to determine multiple groups of resource indication information,
where the third indication information is used to indicate one or more of the following:
   the one CSI report is used for uplink transmission;
   uplink transmission related information corresponding to one or more groups of resource indication information corresponding to the one CSI report;
   uplink transmission related information corresponding to at least one type of resource setting corresponding to the one CSI report; or
   uplink transmission related information corresponding to at least one resource set corresponding to the one CSI report.

In an embodiment, the apparatus further includes:
a third transmitting unit, used for transmitting fourth indication information to the terminal, and the fourth indication information is used to determine multiple groups of resource indication information,
where the fourth indication information is used to indicate one or more of the following:
   the multiple CSI reports is used for uplink transmission;
   uplink transmission related information corresponding to at least one CSI report in the multiple CSI reports;
   uplink transmission related information corresponding to one or more groups of resource indication information corresponding to at least one CSI report in the multiple CSI reports;
   uplink transmission related information corresponding to a resource setting corresponding to at least one CSI report in the multiple CSI reports; or
   uplink transmission related information corresponding to a resource set corresponding to at least one CSI report in the multiple CSI reports.

In an embodiment, the apparatus further includes:
a fourth transmitting unit, used for transmitting a report configuration to the terminal,
where all resources configured by one report configuration correspond to same uplink transmission related information; or one report configuration includes one or more types of resource setting, and all resources set by one type of resource setting correspond to same uplink transmission related information; or one report configuration configures one or more resource sets, and all resources included in one resource set correspond to same uplink transmission related information.

In an embodiment, the uplink transmission related information includes one or more of the following:
an antenna panel;
a transmission and/or reception point;
a sounding reference signal resource set;
an uplink transmission capability index;
an uplink transmission capability value; or
a control resource set pool.

In an embodiment, the apparatus further includes:
a fifth transmitting unit, used for transmitting fifth indication information to the terminal, and the fifth indication information is used to determine multiple groups of resource indication information,
where the fifth indication information is used to indicate one or more of the following:
   an association relationship between report configurations corresponding to at least two groups of resource indication information in the multiple groups of resource indication information;
   an association relationship between resource settings corresponding to at least two groups of resource indication information in the multiple groups of resource indication information; or
   an association relationship between resource sets corresponding to at least two groups of resource indication information in the multiple groups of resource indication information.

In an embodiment, the association relationship includes:
whether capable of being used for uplink simultaneous transmission; and/or
whether corresponding to same uplink transmission related information.

In an embodiment, two resources or two report configurations or two resource settings or two resource sets corresponding to different uplink transmission related information are capable of being used for uplink simultaneous transmission.

In an embodiment, the two report configurations or the two types of resource settings or the two resource sets are capable of being used for uplink simultaneous transmission includes:
any two resources respectively corresponding to the two report configurations or the two types of resource settings or the two resource sets are capable of being used for uplink simultaneous transmission.

In an embodiment, the two resources are capable of being used for uplink simultaneous transmission includes one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

The methods and apparatuses provided by the embodiments of the present application are based on the same conception, the implementation of the apparatuses and methods may be referred to each other since the principles of the methods and apparatuses are similar, and the same part is not repeated.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a flash disk, a mobile hard disk, a read-only memory (ROM), a random access memory (RAM), a magnetic disk, or a compact disk.

It should be noted here that the above apparatus provided by the embodiments of the present application may implement all the method steps implemented by the above method embodiments, and may achieve the same effect. The same parts and beneficial effects as the same method embodiments are not repeated here.

An embodiment of the present application further provides a processor-readable storage medium storing a computer program, where the computer program is used to cause a processor to perform the method for CSI reporting provided by the above embodiments, including:
receiving CSI report indication information transmitted from a network device; and transmitting one or more CSI reports to the network device based on the CSI report indication information, where the one or more CSI reports include multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources;
   or,
receiving one or more CSI reports transmitted from a terminal based on CSI report indication information, where the one or more CSI reports include multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources; and determining two resources capable of being used for uplink simultaneous transmission based on the multiple groups of resource indication information.

The processor-readable storage medium may be any available medium or data storage device that may be accessed by a processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for channel state information (CSI) reporting, comprising:
receiving CSI report indication information transmitted from a network device; and
transmitting one or more CSI reports to the network device based on the CSI report indication information, wherein the one or more CSI reports comprise multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources.

2. The method of claim 1, wherein transmitting the one or more CSI reports to the network device comprises:
determining the multiple groups of resource indication information, and transmitting one or more CSI reports comprising the multiple groups of resource indication information to the network device.

3. The method of claim 2, wherein transmitting the one or more CSI reports to the network device based on the CSI report indication information, wherein the one or more CSI reports comprise the multiple groups of resource indication information, comprises:
transmitting one CSI report to the network device based on the CSI report indication information, wherein the one CSI report comprises multiple groups of resource indication information.

4. The method of claim 2, wherein transmitting the one or more CSI reports to the network device based on the CSI report indication information, wherein the one or more CSI reports comprise the multiple groups of resource indication information, comprises:
transmitting multiple CSI reports to the network device based on the CSI report indication information, wherein the multiple CSI reports comprise multiple groups of resource indication information, and different CSI reports comprise different groups of resource indication information.

5. The method of any of claims 2 to 4, further comprising:
receiving first indication information transmitted from the network device,
wherein the first indication information is used to indicate one or more of the following:
a number of groups of the at least two groups of resource indication information;
a number of groups of the multiple groups of resource indication information;
a number of the one or more CSI reports;
a number of resources indicated by one group of the resource indication information; or
a maximum number of resources indicated by one group of the resource indication information.

6. The method of claim 3 or 4, wherein the one or more CSI reports further comprise second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, wherein any two resources indicated inter the at least two groups of resource indication information are capable of being used for uplink simultaneous transmission.

7. The method of claim 3, wherein determining the multiple groups of resource indication information comprises:
determining the multiple groups of resource indication information based on third indication information transmitted from the network device,
wherein the third indication information is used to indicate one or more of the following:
the one CSI report is used for uplink transmission;
uplink transmission related information corresponding to one or more groups of resource indication information comprised in the one CSI report;
uplink transmission related information corresponding to at least one type of resource setting corresponding to the one CSI report; or
uplink transmission related information corresponding to at least one resource set corresponding to the one CSI report.

8. The method of claim 4, wherein determining the multiple groups of resource indication information comprises:
determining the multiple groups of resource indication information based on fourth indication information transmitted from the network device,
wherein the fourth indication information is used to indicate one or more of the following:
the multiple CSI reports is used for uplink transmission;
uplink transmission related information corresponding to at least one CSI report in the multiple CSI reports;
uplink transmission related information corresponding to one or more groups of resource indication information corresponding to at least one CSI report in the multiple CSI reports;
uplink transmission related information corresponding to a resource setting corresponding to at least one CSI report in the multiple CSI reports; or
uplink transmission related information corresponding to a resource set corresponding to at least one CSI report in the multiple CSI reports.

9. The method of any of claims 2 to 8, wherein determining the multiple groups of resource indication information comprises:
determining the multiple groups of resource indication information based on a report configuration transmitted from the network device,
wherein all resources configured by one report configuration correspond to same uplink transmission related information; or one report configuration corresponds to one or more types of resource setting, and all resources set by one type of resource setting correspond to same uplink transmission related information; or one report configuration configures one or more resource sets, and all resources comprised in one resource set correspond to same uplink transmission related information.

10. The method of any of claims 6 to 8, wherein the uplink transmission related information comprises one or more of the following:
an antenna panel;
a transmission and/or reception point;
a sounding reference signal resource set;
an uplink transmission capability index;
an uplink transmission capability value; or
a control resource set pool.

11. The method of any of claims 2 to 10, wherein determining the multiple groups of resource indication information comprises:
determining the multiple groups of resource indication information based on fifth indication information transmitted from the network device,
wherein the fifth indication information is used to indicate one or more of the following:
an association relationship between report configurations corresponding to at least two groups of resource indication information in the multiple groups of resource indication information;
an association relationship between resource settings corresponding to at least two groups of resource indication information in the multiple groups of resource indication information; or
an association relationship between resource sets corresponding to at least two groups of resource indication information in the multiple groups of resource indication information.

12. The method of claim 11, wherein the association relationship comprises:
whether capable of being used for uplink simultaneous transmission; and/or
whether corresponding to same uplink transmission related information.

13. The method of any of claims 6 to 12, wherein two resources or two report configurations or two resource settings or two resource sets corresponding to different uplink transmission related information are capable of being used for uplink simultaneous transmission.

14. The method of claim 12 or 13, wherein the two report configurations or the two types of resource settings or the two resource sets are capable of being used for uplink simultaneous transmission comprises:
any two resources respectively corresponding to the two report configurations or the two types of resource settings or the two resource sets are capable of being used for uplink simultaneous transmission.

15. The method of any of claims 1 to 14, wherein the two resources are capable of being used for uplink simultaneous transmission comprises one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

16. A method for channel state information (CSI) reporting, comprising:
receiving one or more CSI reports transmitted from a terminal based on CSI report indication information, wherein the one or more CSI reports comprise multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources; and
determining two resources capable of being used for uplink simultaneous transmission based on the multiple groups of resource indication information.

17. The method of claim 16, wherein the multiple groups of resource indication information are determined by the terminal.

18. The method of claim 17, wherein receiving the one or more CSI reports transmitted from the terminal based on the CSI report indication information, wherein the one or more CSI reports comprise the multiple groups of resource indication information, comprises:
receiving one CSI report transmitted from the terminal based on the CSI report indication information, wherein the one CSI report comprises multiple groups of resource indication information.

19. The method of claim 17, wherein receiving the one or more CSI reports transmitted from the terminal based on the CSI report indication information, wherein the one or more CSI reports comprise the multiple groups of resource indication information, comprises:
receiving multiple CSI reports transmitted from the terminal based on the CSI report indication information, wherein the multiple CSI reports comprise multiple groups of resource indication information, the multiple CSI reports comprise multiple groups of resource indication information, and different CSI reports comprise different groups of resource indication information.

20. The method of any of claims 17 to 19, further comprising:
transmitting first indication information to the terminal, wherein the first indication information is used to indicate one or more of the following:
a number of groups of the at least two groups of resource indication information;
a number of groups of the multiple groups of resource indication information;
a number of the one or more CSI reports;
a number of resources indicated by one group of the resource indication information; or
a maximum number of resources indicated by one group of the resource indication information.

21. The method of claim 18 or 19, wherein the one or more CSI reports further comprise second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, wherein any two resources indicated inter the at least two groups of resource indication information are capable of being used for uplink simultaneous transmission.

22. The method of claim 18, further comprising:
transmitting third indication information to the terminal,
wherein the third indication information is used to indicate one or more of the following:
the one CSI report is used for uplink transmission;
uplink transmission related information corresponding to one or more groups of resource indication information corresponding to the one CSI report;
uplink transmission related information corresponding to at least one type of resource setting corresponding to the one CSI report; or
uplink transmission related information corresponding to at least one resource set corresponding to the one CSI report.

23. The method of claim 19, further comprising:
transmitting fourth indication information to the terminal,
wherein the fourth indication information is used to indicate one or more of the following:
the multiple CSI reports is used for uplink transmission;
uplink transmission related information corresponding to at least one CSI report in the multiple CSI reports;
uplink transmission related information corresponding to one or more groups of resource indication information corresponding to at least one CSI report in the multiple CSI reports;
uplink transmission related information corresponding to a resource setting corresponding to at least one CSI report in the multiple CSI reports; or
uplink transmission related information corresponding to a resource set corresponding to at least one CSI report in the multiple CSI reports.

24. The method of any of claims 17 to 23, further comprising:
transmitting a report configuration to the terminal,
wherein all resources configured by one report configuration correspond to same uplink transmission related information; or one report configuration comprises one or more types of resource setting, and all resources set by one type of resource setting correspond to same uplink transmission related information; or one report configuration configures one or more resource sets, and all resources comprised in one resource set correspond to same uplink transmission related information.

25. The method of any of claims 21 to 23, wherein the uplink transmission related information comprises one or more of the following:
an antenna panel;
a transmission and/or reception point;
a sounding reference signal resource set;
an uplink transmission capability index;
an uplink transmission capability value; or
a control resource set pool.

26. The method of any of claims 17 to 25, further comprising:
transmitting fifth indication information to the terminal, wherein the fifth indication information is used to indicate one or more of the following:
an association relationship between report configurations corresponding to at least two groups of resource indication information in the multiple groups of resource indication information;
an association relationship between resource settings corresponding to at least two groups of resource indication information in the multiple groups of resource indication information; or
an association relationship between resource sets corresponding to at least two groups of resource indication information in the multiple groups of resource indication information.

27. The method of claim 26, wherein the association relationship comprises:
whether capable of being used for uplink simultaneous transmission; and/or
whether corresponding to same uplink transmission related information.

28. The method of any of claims 21 to 27, wherein two resources or two report configurations or two resource settings or two resource sets corresponding to different uplink transmission related information are capable of being used for uplink simultaneous transmission.

29. The method of claim 27 or 28, wherein the two report configurations or the two types of resource settings or the two resource sets are capable of being used for uplink simultaneous transmission comprises:
any two resources respectively corresponding to the two report configurations or the two types of resource settings or the two resource sets are capable of being used for uplink simultaneous transmission.

30. The method of any of claims 16 to 29, wherein the two resources are capable of being used for uplink simultaneous transmission comprises one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

31. A terminal, comprising a memory, a transceiver and a processor,
wherein the memory is used for storing a computer program, the transceiver is used for receiving and transmitting data under control of the processor, and the processor is used for reading the computer program in the memory and performing the following operations:
receiving channel state information (CSI) report indication information transmitted from a network device; and
transmitting one or more CSI reports to the network device based on the CSI report indication information, wherein the one or more CSI reports comprise multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources.

32. The terminal of claim 31, wherein transmitting the one or more CSI reports to the network device comprises:
determining the multiple groups of resource indication information, and transmitting one or more CSI reports comprising the multiple groups of resource indication information to the network device.

33. The terminal of claim 32, wherein transmitting the one or more CSI reports to the network device based on the CSI report indication information, wherein the one or more CSI reports comprise the multiple groups of resource indication information, comprises:
transmitting one CSI report to the network device based on the CSI report indication information, wherein the one CSI report comprises multiple groups of resource indication information.

34. The terminal of claim 32, wherein transmitting the one or more CSI reports to the network device based on the CSI report indication information, wherein the one or more CSI reports comprise the multiple groups of resource indication information, comprises:
transmitting multiple CSI reports to the network device based on the CSI report indication information, wherein the multiple CSI reports comprise multiple groups of resource indication information, and different CSI reports comprise different groups of resource indication information.

35. The terminal of any of claims 32 to 34, wherein the processor is used for reading the computer program in the memory and further performing the following operations:
receiving first indication information transmitted from the network device,
wherein the first indication information is used to indicate one or more of the following:
a number of groups of the at least two groups of resource indication information;
a number of groups of the multiple groups of resource indication information;
a number of the one or more CSI reports;
a number of resources indicated by one group of the resource indication information; or
a maximum number of resources indicated by one group of the resource indication information.

36. The terminal of claim 33 or 34, wherein the one or more CSI reports further comprise second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, wherein any two resources indicated inter the at least two groups of resource indication information are capable of being used for uplink simultaneous transmission.

37. The terminal of claim 33, wherein determining the multiple groups of resource indication information comprises:
determining the multiple groups of resource indication information based on third indication information transmitted from the network device,
wherein the third indication information is used to indicate one or more of the following:
the one CSI report is used for uplink transmission;
uplink transmission related information corresponding to one or more groups of resource indication information comprised in the one CSI report;
uplink transmission related information corresponding to at least one type of resource setting corresponding to the one CSI report; or
uplink transmission related information corresponding to at least one resource set corresponding to the one CSI report.

38. The terminal of claim 34, wherein determining the multiple groups of resource indication information comprises:
determining the multiple groups of resource indication information based on fourth indication information transmitted from the network device,
wherein the fourth indication information is used to indicate one or more of the following:
the multiple CSI reports is used for uplink transmission;
uplink transmission related information corresponding to at least one CSI report in the multiple CSI reports;
uplink transmission related information corresponding to one or more groups of resource indication information corresponding to at least one CSI report in the multiple CSI reports;
uplink transmission related information corresponding to a resource setting corresponding to at least one CSI report in the multiple CSI reports; or
uplink transmission related information corresponding to a resource set corresponding to at least one CSI report in the multiple CSI reports.

39. The terminal of any of claims 32 to 38, wherein determining the multiple groups of resource indication information comprises:
determining the multiple groups of resource indication information based on a report configuration transmitted from the network device,
wherein all resources configured by one report configuration correspond to same uplink transmission related information; or one report configuration corresponds to one or more types of resource setting, and all resources set by one type of resource setting correspond to same uplink transmission related information; or one report configuration configures one or more resource sets, and all resources comprised in one resource set correspond to same uplink transmission related information.

40. The terminal of any of claims 36 to 38, wherein the uplink transmission related information comprises one or more of the following:
an antenna panel;
a transmission and/or reception point;
a sounding reference signal resource set;
an uplink transmission capability index;
an uplink transmission capability value; or
a control resource set pool.

41. The terminal of any of claims 32 to 40, wherein determining the multiple groups of resource indication information comprises:
determining the multiple groups of resource indication information based on fifth indication information transmitted from the network device,
wherein the fifth indication information is used to indicate one or more of the following:
an association relationship between report configurations corresponding to at least two groups of resource indication information in the multiple groups of resource indication information;
an association relationship between resource settings corresponding to at least two groups of resource indication information in the multiple groups of resource indication information; or
an association relationship between resource sets corresponding to at least two groups of resource indication information in the multiple groups of resource indication information.

42. The terminal of claim 41, wherein the association relationship comprises:
whether capable of being used for uplink simultaneous transmission; and/or
whether corresponding to same uplink transmission related information.

43. The terminal of any of claims 36 to 42, wherein two resources or two report configurations or two resource settings or two resource sets corresponding to different uplink transmission related information are capable of being used for uplink simultaneous transmission.

44. The terminal of claim 42 or 43, wherein the two report configurations or the two types of resource settings or the two resource sets are capable of being used for uplink simultaneous transmission comprises:
any two resources respectively corresponding to the two report configurations or the two types of resource settings or the two resource sets are capable of being used for uplink simultaneous transmission.

45. The terminal of any of claims 31 to 44, wherein the two resources are capable of being used for uplink simultaneous transmission comprises one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

46. A network device, comprising a memory, a transceiver and a processor,
wherein the memory is used for storing a computer program, the transceiver is used for receiving and transmitting data under control of the processor, and the processor is used for reading the computer program in the memory and performing the following operations:
receiving one or more channel state information (CSI) reports transmitted from a terminal based on CSI report indication information, wherein the one or more CSI reports comprise multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources; and
determining two resources capable of being used for uplink simultaneous transmission based on the multiple groups of resource indication information.

47. The network device of claim 46, wherein the multiple groups of resource indication information are determined by the terminal.

48. The network device of claim 47, wherein receiving the one or more CSI reports transmitted from the terminal based on the CSI report indication information, wherein the one or more CSI reports comprise the multiple groups of resource indication information, comprises:
receiving one CSI report transmitted from the terminal based on the CSI report indication information, wherein the one CSI report comprises multiple groups of resource indication information.

49. The network device of claim 47, wherein receiving the one or more CSI reports transmitted from the terminal based on the CSI report indication information, wherein the one or more CSI reports comprise the multiple groups of resource indication information, comprises:
receiving multiple CSI reports transmitted from the terminal based on the CSI report indication information, wherein the multiple CSI reports comprise multiple groups of resource indication information, and different CSI reports comprise different groups of resource indication information.

50. The network device of any of claims 47 to 49, wherein the processor is used for reading the computer program in the memory and further performing the following operations:
transmitting first indication information to the terminal, wherein the first indication information is used to indicate one or more of the following:
a number of groups of the at least two groups of resource indication information;
a number of groups of the multiple groups of resource indication information;
a number of the one or more CSI reports;
a number of resources indicated by one group of the resource indication information; or
a maximum number of resources indicated by one group of the resource indication information.

51. The network device of claim 48 or 49, wherein the one or more CSI reports further comprise second indication information, and the second indication information is used to indicate one or more of the following:
whether the one or more CSI reports are capable of being used for uplink simultaneous transmission;
whether one or more groups of resources indicated by the multiple groups of resource indication information are capable of being used for uplink simultaneous transmission;
uplink transmission related information corresponding to the one or more CSI reports;
uplink transmission related information corresponding to one or more groups of the resource indication information;
uplink transmission related information corresponding to one or more groups of the resource indication information corresponding to different resource settings;
uplink transmission related information corresponding to one or more groups of the resource indication information corresponding to different resource sets; or
groups corresponding to the at least two groups of resource indication information, wherein any two resources indicated inter the at least two groups of resource indication information are capable of being used for uplink simultaneous transmission.

52. The network device of claim 48, wherein the processor is used for reading the computer program in the memory and further performing the following operations:
transmitting third indication information to the terminal,
wherein the third indication information is used to indicate one or more of the following:
the one CSI report is used for uplink transmission;
uplink transmission related information corresponding to one or more groups of resource indication information corresponding to the one CSI report;
uplink transmission related information corresponding to at least one type of resource setting corresponding to the one CSI report; or
uplink transmission related information corresponding to at least one resource set corresponding to the one CSI report.

53. The network device of claim 49, wherein the processor is used for reading the computer program in the memory and further performing the following operations:
transmitting fourth indication information to the terminal,
wherein the fourth indication information is used to indicate one or more of the following:
the multiple CSI reports is used for uplink transmission;
uplink transmission related information corresponding to at least one CSI report in the multiple CSI reports;
uplink transmission related information corresponding to one or more groups of resource indication information corresponding to at least one CSI report in the multiple CSI reports;
uplink transmission related information corresponding to a resource setting corresponding to at least one CSI report in the multiple CSI reports; or
uplink transmission related information corresponding to a resource set corresponding to at least one CSI report in the multiple CSI reports.

54. The network device of any of claims 47 to 53, wherein the processor is used for reading the computer program in the memory and further performing the following operations:
transmitting a report configuration to the terminal,
wherein all resources configured by one report configuration correspond to same uplink transmission related information; or one report configuration comprises one or more types of resource setting, and all resources set by one type of resource setting correspond to same uplink transmission related information; or one report configuration configures one or more resource sets, and all resources comprised in one resource set correspond to same uplink transmission related information.

55. The network device of any of claims 51 to 53, wherein the uplink transmission related information comprises one or more of the following:
an antenna panel;
a transmission and/or reception point;
a sounding reference signal resource set;
an uplink transmission capability index;
an uplink transmission capability value; or
a control resource set pool.

56. The network device of any of claims 47 to 55, wherein the processor is used for reading the computer program in the memory and further performing the following operations:
transmitting fifth indication information to the terminal, wherein the fifth indication information is used to indicate one or more of the following:
an association relationship between report configurations corresponding to at least two groups of resource indication information in the multiple groups of resource indication information;
an association relationship between resource settings corresponding to at least two groups of resource indication information in the multiple groups of resource indication information; or
an association relationship between resource sets corresponding to at least two groups of resource indication information in the multiple groups of resource indication information.

57. The network device of claim 56, wherein the association relationship comprises:
whether capable of being used for uplink simultaneous transmission; and/or
whether corresponding to same uplink transmission related information.

58. The network device of any of claims 51 to 57, wherein two resources or two report configurations or two resource settings or two resource sets corresponding to different uplink transmission related information are capable of being used for uplink simultaneous transmission.

59. The network device of claim 57 or 58, wherein the two report configurations or the two types of resource settings or the two resource sets are capable of being used for uplink simultaneous transmission comprises:
any two resources respectively corresponding to the two report configurations or the two types of resource settings or the two resource sets are capable of being used for uplink simultaneous transmission.

60. The network device of any of claims 46 to 59, wherein the two resources are capable of being used for uplink simultaneous transmission comprises one or more of the following:
spatial relation filters corresponding to the two resources are capable of being used simultaneously;
uplink transmit beams corresponding to the two resources are capable of being used simultaneously;
in case that the two resources are used as source reference resources for spatial relation information of a first signal, uplink simultaneous transmission of the first signal is capable to be performed based on the spatial relation information corresponding to the two resources;
in case that the two resources are used as source reference resources for spatial relation information of a first resource, the spatial relation information corresponding to the two resources is capable of being used for uplink simultaneous transmission of a first signal corresponding to the first resource;
in case that the two resources are used as source reference resources for spatial relation information of a first resource, the spatial relation information corresponding to the two resources is capable of being used for uplink simultaneous transmission of a first signal corresponding to the first resource in space division multiplexing or frequency division multiplexing;
two uplink signals corresponding to the two resources are capable of simultaneous transmission; or
receive antennas corresponding to the two resources are different.

61. An apparatus for channel state information (CSI) reporting, comprising:
a first receiving unit, used for receiving CSI report indication information transmitted from a network device; and
a transmitting unit, used for transmitting one or more CSI reports to the network device based on the CSI report indication information, wherein the one or more CSI reports comprise multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources.

62. An apparatus for channel state information (CSI) reporting, comprising:
a receiving unit, used for receiving one or more CSI reports transmitted from a terminal based on CSI report indication information, wherein the one or more CSI reports comprise multiple groups of resource indication information, any two resources indicated inter at least two groups of resource indication information in the multiple groups of resource indication information are capable of being used for uplink simultaneous transmission, and any one group of resource indication information in the multiple groups of resource indication information is used to indicate multiple resources; and
a determining unit, used for determining two resources capable of being used for uplink simultaneous transmission based on the multiple groups of resource indication information.

63. A computer-readable storage medium storing a computer program, wherein the computer program is used to cause a computer to perform the method of any of claims 1 to 15, or perform the method of any of claims 16 to 30.
